(19) 

**Europäisches Patentamt**
**European Patent Office**
**Office européen des brevets**

(11) **EP 4 478 094 A1**

(12) **EUROPEAN PATENT APPLICATION**

(43) Date of publication:
**18.12.2024 Bulletin 2024/51**

(21) Application number: **24182223.8**

(22) Date of filing: **14.06.2024**

(51) International Patent Classification (IPC):
***G01V 1/28*** *(2006.01)*     ***G01V 1/30*** *(2006.01)*
***G01V 1/38*** *(2006.01)*

(52) Cooperative Patent Classification (CPC):
**G01V 1/282; G01V 1/301; G01V 1/38;**
G01V 2210/614; G01V 2210/6161; G01V 2210/67

---

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 US 202363508568 P**

(71) Applicants:
• **Services Pétroliers Schlumberger
75007 Paris (FR)**
Designated Contracting States:
**FR**
• **GeoQuest Systems B.V.
2514 JG The Hague (NL)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **RICKETT, James
Crawley, CB3 0EL (GB)**
• **HALLIDAY, David Fraser
Crawley, CB3 0EL (GB)**

(74) Representative: **Schlumberger Intellectual
Property Department
Parkstraat 83
2514 JG Den Haag (NL)**

---

(54) **CONTINUOUS SOURCE REFLECTION SEISMOLOGY FRAMEWORK**

(57) A method can include receiving continuous source seismic data from a marine seismic survey of a geologic region; breaking up the continuous source seismic data into portions; performing a simulation for each of the portions to generate simulated seismic data; and generating an image of the geologic region using the portions of the continuous source seismic data and the simulated seismic data.

EP 4 478 094 A1

800

$x$

Entire source line

$t$

Acquired data: **d**

Point source
representation: $\widehat{\mathbf{m}}$

Residual: $\varepsilon$

Windowed
residual: $\mathbf{W}_i\,\varepsilon$

$x$

Subset of
source line

$t$

Simulated
data: $\mathbf{F}_i\,\widehat{\mathbf{m}}$

Data for imaging

# Fig. 8

**Description**

RELATED APPLICATIONS

This application claims priority to and the benefit of a US Provisional Application having Serial No. 63/508,568, filed 16 June 2023, which is incorporated by reference herein in its entirety.

BACKGROUND

Reflection seismology finds use in geophysics, for example, to estimate properties of subsurface formations (e.g., to characterize a subterranean environment with one or more formations). As an example, reflection seismology may provide seismic data representing waves of elastic energy (e.g., as transmitted by P-waves and S-waves, in a frequency range of approximately 1 Hz to approximately 100 Hz). Seismic data may be processed and interpreted, for example, to understand better composition, fluid content, extent and geometry of subsurface rocks. Propagation of seismic energy, as in reflection seismology, can depend on one or more characteristics of a subsurface medium or media. Reflection seismology data can be used to understand or characterize one or more subsurface formations.

SUMMARY

A method can include receiving continuous source seismic data from a marine seismic survey of a geologic region; breaking up the continuous source seismic data into portions; performing a simulation for each of the portions to generate simulated seismic data; and generating an image of the geologic region using the portions of the continuous source seismic data and the simulated seismic data. A system can include a processor; memory accessible by the processor; and processor-executable instructions stored in the memory that are executable to instruct the system to: receive continuous source seismic data from a marine seismic survey of a geologic region; break up the continuous source seismic data into portions; perform a simulation for each of the portions to generate simulated seismic data; and generate an image of the geologic region using the portions of the continuous source seismic data and the simulated seismic data. One or more computer-readable storage media can include computer-executable instructions executable to instruct a computer to: receive continuous source seismic data from a marine seismic survey of a geologic region; break up the continuous source seismic data into portions; perform a simulation for each of the portions to generate simulated seismic data; and generate an image of the geologic region using the portions of the continuous source seismic data and the simulated seismic data. Various other examples of methods, devices, systems, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 illustrates an example of a framework and an example of a geologic environment;
Fig. 2 illustrates examples of signals, an example of a technique and examples of multiple reflections;
Fig. 3 illustrates examples of survey techniques;
Fig. 4 illustrates examples of survey techniques;
Fig. 5 illustrates an example of a method;
Fig. 6 illustrates an example of a method;
Fig. 7 illustrates examples of methods;
Fig. 8 illustrates an example of a method;
Fig. 9 illustrates an example of a method;
Fig. 10 illustrates an example of a method and an example of a system;
Fig. 11 illustrates an example of a computational framework; and
Fig. 12 illustrates example components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

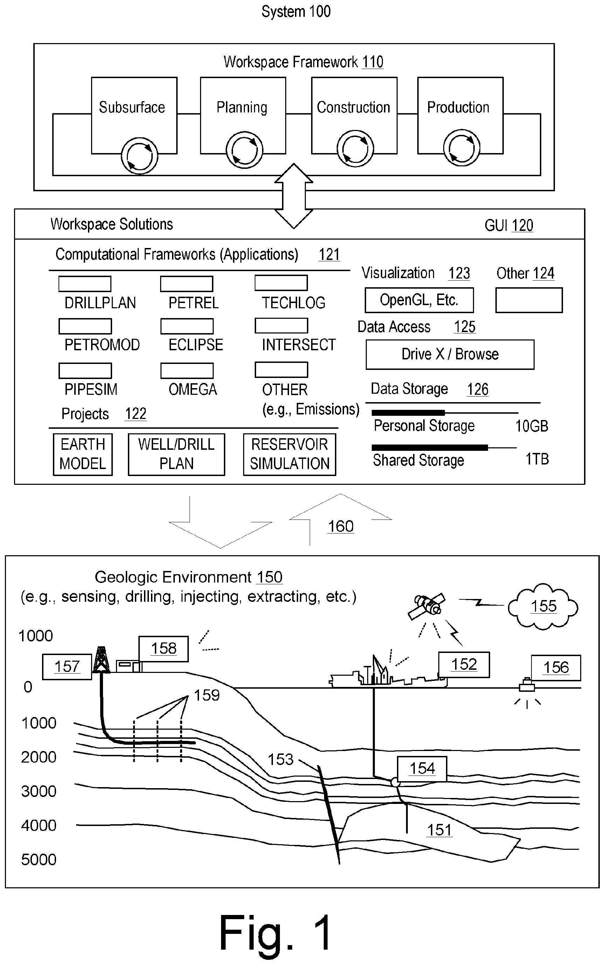

Fig. 1 shows an example of a system 100 that includes a workspace framework 110 that can provide for instantiation of, rendering of, interactions with, etc., a graphical user interface (GUI) 120. In the example of Fig. 1, the GUI 120 can include graphical controls for computational frameworks (e.g., applications) 121, projects 122, visualization 123, one or more other features 124, data access 125, and data storage 126.

In the example of Fig. 1, the workspace framework 110 may be tailored to a particular geologic environment such as an example geologic environment 150. For example, the geologic environment 150 may include layers (e.g., stratification) that include a reservoir 151 and that may be intersected by a fault 153. As an example, the geologic environment 150 may be outfitted with a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a wellsite and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 1 shows a satellite in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

In the example of Fig. 1, the GUI 120 shows some examples of computational frameworks, including the DRILLPLAN, PETREL, TECHLOG, PETROMOD, ECLIPSE, INTERSECT, PIPESIM and OMEGA frameworks (SLB, Houston, Texas). As to another type of framework, consider, for example, an emissions framework (EF), which may be operable in combination with one or more other frameworks to make determinations as to emissions (e.g., of one or more field operations, etc.). In such an example, an EF may provide feedback such that another framework can operate on output of the EF, for example, to revise a plan, revise a control scheme, etc., which may be in a manner that aims to reduce one or more types of emissions and/or other impact from an activity, etc.

The DRILLPLAN framework provides for digital well construction planning and includes features for automation of repetitive tasks and validation workflows, enabling improved quality drilling programs (e.g., digital drilling plans, etc.) to be produced quickly with assured coherency.

The PETREL framework can be part of the DELFI cognitive E&P environment (SLB, Houston, Texas) for utilization in geosciences and geoengineering, for example, to analyze subsurface data from exploration to production of fluid from a reservoir.

The TECHLOG framework can handle and process field and laboratory data for a variety of geologic environments (e.g., deepwater exploration, shale, etc.). The TECHLOG framework can structure wellbore data for analyses, planning, etc.

The PETROMOD framework provides petroleum systems modeling capabilities that can combine one or more of seismic, well, and geological information to model the evolution of a sedimentary basin. The PETROMOD framework can predict if, and how, a reservoir has been charged with hydrocarbons, including the source and timing of hydrocarbon generation, migration routes, quantities, and hydrocarbon type in the subsurface or at surface conditions.

The ECLIPSE framework provides a reservoir simulator (e.g., as a computational framework) with numerical solutions for fast and accurate prediction of dynamic behavior for various types of reservoirs and development schemes.

The INTERSECT framework provides a high-resolution reservoir simulator for simulation of detailed geological features and quantification of uncertainties, for example, by creating accurate production scenarios and, with the integration of precise models of the surface facilities and field operations, the INTERSECT framework can produce reliable results, which may be continuously updated by real-time data exchanges (e.g., from one or more types of data acquisition equipment in the field that can acquire data during one or more types of field operations, etc.). The INTERSECT framework can provide completion configurations for complex wells where such configurations can be built in the field, can provide detailed chemical-enhanced-oil-recovery (EOR) formulations where such formulations can be implemented in the field, can analyze application of steam injection and other thermal EOR techniques for implementation in the field, advanced production controls in terms of reservoir coupling and flexible field management, and flexibility to script customized solutions for improved modeling and field management control. The INTERSECT framework, as with the other example frameworks, may be utilized as part of the DELFI cognitive E&P environment, for example, for rapid simulation of multiple concurrent cases. For example, a workflow may utilize one or more of the DELFI on demand reservoir simulation features.

The PIPESIM simulator includes solvers that may provide simulation results such as, for example, multiphase flow results (e.g., from a reservoir to a wellhead and beyond, etc.), flowline and surface facility performance, etc. The PIPESIM simulator may be integrated, for example, with the AVOCET production operations framework (SLB, Houston Texas). As an example, a reservoir or reservoirs may be simulated with respect to one or more enhanced recovery techniques (e.g., consider a thermal process such as steam-assisted gravity drainage (SAGD), etc.). As an example, the PIPESIM simulator may be an optimizer that can optimize one or more operational scenarios at least in part via simulation of physical phenomena.

The OMEGA framework includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as anisotropy, dip, and variable density. The OMEGA framework also includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools. Various features can be included for processing various types of data such as, for example, one or more of: land, marine, and transition zone data; time and depth data; 2D, 3D, and 4D surveys; isotropic and anisotropic (TTI and VTI) velocity fields; and multicomponent data.

The aforementioned DELFI environment provides various features for workflows as to subsurface analysis, planning, construction and production, for example, as illustrated in the workspace framework 110. As shown in Fig. 1, outputs from the workspace framework 110 can be utilized for directing, controlling, etc., one or more processes in the geologic environment 150 and, feedback 160, can be received via one or more interfaces in one or more forms (e.g., acquired data as to operational conditions, equipment conditions, environment conditions, etc.).

As an example, a workflow may progress to a geology and geophysics ("G&G") service provider, which may generate a well trajectory, which may involve execution of one or more G&G software packages. Examples of such software packages include the PETREL framework. As an example, a system or systems may utilize a framework such as the DELFI framework (SLB, Houston, Texas). Such a framework may operatively couple various other frameworks to provide for a multi-framework workspace. As an example, the GUI 120 of Fig. 1 may be a GUI of the DELFI framework.

In the example of Fig. 1, the visualization features 123 may be implemented via the workspace framework 110, for example, to perform tasks as associated with one or more of subsurface regions, planning operations, constructing wells and/or surface fluid networks, and producing from a reservoir.

As an example, visualization features can provide for visualization of various earth models, properties, etc., in one or more dimensions. As an example, visualization features can provide for rendering of information in multiple dimensions, which may optionally include multiple resolution rendering. In such an example, information being rendered may be associated with one or more frameworks and/or one or more data stores. As an example, visualization features may include one or more control features for control of equipment, which can include, for example, field equipment that can perform one or more field operations. As an example, a workflow may utilize one or more frameworks to generate information that can be utilized to control one or more types of field equipment (e.g., drilling equipment, wireline equipment, fracturing equipment, etc.).

As to a reservoir model that may be suitable for utilization by a simulator, consider acquisition of seismic data as acquired via reflection seismology, which finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz). Seismic data may be processed and interpreted, for example, to understand better composition, fluid content, extent and geometry of subsurface rocks. Such interpretation results can be utilized to plan, simulate, perform, etc., one or more operations for production of fluid from a reservoir (e.g., reservoir rock, etc.).

Field acquisition equipment may be utilized to acquire seismic data, which may be in the form of traces where a trace can include values organized with respect to time and/or depth (e.g., consider 1D, 2D, 3D or 4D seismic data). For example, consider acquisition equipment that acquires digital samples at a rate of one sample per approximately 4 ms. Given a speed of sound in a medium or media, a sample rate may be converted to an approximate distance. For example, the speed of sound in rock may be on the order of around 5 km per second. Thus, a sample time spacing of approximately 4 ms would correspond to a sample "depth" spacing of about 10 meters (e.g., assuming a path length from source to boundary and boundary to sensor). As an example, a trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing example is divided by two (e.g., to account for reflection), for a vertically aligned source and sensor, a deepest boundary depth may be estimated to be about 10 km (e.g., assuming a speed of sound of about 5 km per second).

As an example, a model may be a simulated version of a geologic environment. As an example, a simulator may include features for simulating physical phenomena in a geologic environment based at least in part on a model or models. A simulator, such as a reservoir simulator, can simulate fluid flow in a geologic environment based at least in part on a model that can be generated via a framework that receives seismic data. A simulator can be a computerized system (e.g., a computing system) that can execute instructions using one or more processors to solve a system of equations that describe physical phenomena subject to various constraints. In such an example, the system of equations may be spatially defined (e.g., numerically discretized) according to a spatial model that that includes layers of rock, geobodies, etc., that have corresponding positions that can be based on interpretation of seismic and/or other data. A spatial model may be a cell-based model where cells are defined by a grid (e.g., a mesh). A cell in a cell-based model can represent a physical area or volume in a geologic environment where the cell can be assigned physical properties (e.g., permeability, fluid properties, etc.) that may be germane to one or more physical phenomena (e.g., fluid volume, fluid flow, pressure, etc.). A reservoir simulation model can be a spatial model that may be cell-based.

A simulator can be utilized to simulate the exploitation of a real reservoir, for example, to examine different productions scenarios to find an optimal one before production or further production occurs. A reservoir simulator does not provide an exact replica of flow in and production from a reservoir at least in part because the description of the reservoir and the boundary conditions for the equations for flow in a porous rock are generally known with an amount of uncertainty. Certain types of physical phenomena occur at a spatial scale that can be relatively small compared to size of a field. A balance can be struck between model scale and computational resources that results in model cell sizes being of the order of meters; rather than a lesser size (e.g., a level of detail of pores). A modeling and simulation workflow for multiphase flow in porous media (e.g., reservoir rock, etc.) can include generalizing real micro-scale data from macro scale observations (e.g., seismic data and well data) and upscaling to a manageable scale and problem size. Uncertainties can exist in input data and solution procedure such that simulation results too are to some extent uncertain. A process known as history matching can involve comparing simulation results to actual field data acquired during production of fluid from a field. Information gleaned from history matching, can provide for adjustments to a model, data, etc., which can help to increase accuracy of simulation.

As an example, a simulator may utilize various types of constructs, which may be referred to as entities. Entities may include earth entities or geological objects such as wells, surfaces, reservoirs, etc. Entities can include virtual representations of actual physical entities that may be reconstructed for purposes of simulation. Entities may include entities based on data acquired via sensing, observation, etc. (e.g., consider entities based at least in part on seismic data and/or other information). As an example, an entity may be characterized by one or more properties (e.g., a geometrical pillar grid entity of an earth model may be characterized by a porosity property, etc.). Such properties may represent one or more measurements (e.g., acquired data), calculations, etc.

As an example, a simulator may utilize an object-based software framework, which may include entities based on pre-defined classes to facilitate modeling and simulation. As an example, an object class can encapsulate reusable code and associated data structures. Object classes can be used to instantiate object instances for use by a program, script, etc. For example, borehole classes may define objects for representing boreholes based on well data. A model of a basin, a reservoir, etc. may include one or more boreholes where a borehole may be, for example, for measurements, injection, production, etc. As an example, a borehole may be a wellbore of a well, which may be a completed well (e.g., for production of a resource from a reservoir, for injection of material, etc.).

While several simulators are illustrated in the example of Fig. 1, one or more other simulators may be utilized, additionally or alternatively. For example, consider the VISAGE geomechanics simulator (SLB, Houston Texas), etc. The VISAGE simulator includes finite element numerical solvers that may provide simulation results such as, for example, results as to compaction and subsidence of a geologic environment, well and completion integrity in a geologic environment, cap-rock and fault-seal integrity in a geologic environment, fracture behavior in a geologic environment, thermal recovery in a geologic environment, $CO_2$ disposal, etc. The MANGROVE simulator (SLB, Houston, Texas) provides for optimization of stimulation design (e.g., stimulation treatment operations such as hydraulic fracturing) in a reservoir-centric environment. The MANGROVE framework can combine scientific and experimental work to predict geomechanical propagation of hydraulic fractures, reactivation of natural fractures, etc., along with production forecasts within 3D reservoir models (e.g., production from a drainage area of a reservoir where fluid moves via one or more types of fractures to a well and/or from a well). The MANGROVE framework can provide results pertaining to heterogeneous interactions between hydraulic and natural fracture networks, which may assist with optimization of the number and location of fracture treatment stages (e.g., stimulation treatment(s)), for example, to increased perforation efficiency and recovery.

As mentioned, a framework may be implemented within or in a manner operatively coupled to the DELFI cognitive exploration and production (E&P) environment (SLB, Houston, Texas), which is a secure, cognitive, cloud-based collaborative environment that integrates data and workflows with digital technologies, such as artificial intelligence and machine learning. As an example, such an environment can provide for operations that involve one or more frameworks. The DELFI environment may be referred to as the DELFI framework, which may be a framework of frameworks.

As an example, the DELFI framework can include various other frameworks, which can include, for example, one or more types of models (e.g., simulation models, etc.).

As mentioned, reflection seismology finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz or optionally less than 1 Hz and/or optionally more than 100 Hz). Seismic data may be processed and interpreted, for example, to understand better composition, fluid content, extent and geometry of subsurface rocks.

Digital images of a subsurface region of the Earth can be generated using digital seismic data acquired using reflection seismology as part of a seismic survey. A digital image can show subterranean structure, for example, as related to one or more of exploration for petroleum, natural gas, and mineral deposits. As an example, reflection seismology can include determining time intervals that elapse between initiation of a seismic wave at a selected shot point (e.g., the location where an explosion generates seismic waves) and the arrival of reflected or refracted impulses at one or more seismic detectors (e.g., sensing of seismic energy at one or more seismic receivers). As an example, a seismic air gun can be used to initiate seismic waves. As an example, one or more electric vibrators or falling weights (e.g., thumpers) may be employed at one or more sites. Upon arrival at the detectors, the amplitude and timing of seismic energy waves can be recorded, for example, as a seismogram (e.g., a record of ground vibrations).

In various regions of the Earth, the material density (e.g., rock density) increases with depth. Seismic energy waves can be initiated at a shot point (or points) at or near the surface where a portion of the seismic energy, as waves, may reach one or more receiving points. Material properties and structural organization of materials (e.g., as objects, layers, etc.) can affect seismic energy waves in one or more manners. Received seismic energy waves can be utilized to determine one or more types of material properties and/or structural organization of one or more types of materials. As with sound traveling through air or water, seismic energy waves can be attenuated as they pass through subsurface materials, which may include air, water, hydrocarbons, rock, etc. Such attenuation can occur in a manner that is dependent on material properties of such materials.

Interpretation of the depths and media reached by seismic energy waves can depend on geometry of a seismic survey, for example, on the distance between shot points and receiving points, as well as densities of media. Results of a seismic survey may be in digital form (e.g., digital data) as stored in memory of a computing device where display circuitry (e.g., a graphics processor, a video processor, etc.) can render the digital data to a display in the form of a cross-sectional image of subsurface structures as if cut by a plane through the shot point, the detector, and a reference point such as the Earth's center. As an example, digital image processing can involve receiving seismic data as digital data, processing the seismic data via one or more techniques, and rendering processed seismic data to a display as an image of a region of the Earth that can show structural features of the Earth that otherwise are not visible from an observer standing on the surface of the Earth.

A seismic survey can be defined with respect to a region of the Earth and, for example, a manner of acquisition of seismic data. As an example, a survey may be two-dimensional, three-dimensional, four-dimensional, etc. Dimensions include one or more spatial dimensions and optionally one or more temporal dimensions (e.g., repeating a survey for a region at different points in time). As to a 2D survey, a grid may be considered dense if the line spacing (e.g., of receivers) is less than about 400 m. As to a 3D spatial survey, in comparison to a 2D spatial survey, it may help to elucidate true structural dip (e.g., a 2D survey may give apparent dip), it may provide more and better stratigraphic information, it may provide a map view of reservoir properties, it may provide a better areal mapping of fault patterns and connections and delineation of reservoir blocks, it may provide better lateral resolution (e.g., 2D may suffer from a cross-line smearing, or Fresnel zone, problem).

As to data sets, a 3D spatial seismic data set can be a cube or volume of data. As an example, a 2D spatial seismic data set can be a panel of data. To interpret 3D seismic data, a method can process the "interior" of the cube (e.g., seismic cube) using one or more processors of computing equipment. As an example, a 3D seismic data set can range in size from a few tens of megabytes to several gigabytes or more.

As to a 3D seismic cube, a point can have an (x, y, z) coordinate and a data value. A coordinate can be a distance from a particular corner of the cube. A 3D seismic data volume is like a room-temperature example (e.g., where temperature differs in a cube shaped room), however, rather than a height of a room, a height or vertical axis can be in terms of a two-way traveltime, which may be a proxy for depth. In such an example, the 3D seismic cube is still a spatial cube because the data therein correspond to the same survey where, rather than depth, two-way traveltime (TWT) is utilized, which, can be, in general, a proxy for depth. And, in contrast to room-temperature, data values can be seismic amplitudes (e.g., amplitudes of seismic energy waves). A 3D seismic data set can be, for example, a box full of electronically determined numbers where each number represents a measurement (e.g., amplitude of a seismic energy wave, etc.). In a 3D seismic data set, amplitudes may be rendered as data values in the form of one or more images for slices through the 3D seismic data set where, for example, in grayscale, dark and light image bands in the sections are related to rock boundaries.

Reflection seismology can be implemented as a technique that detects "edges" of materials in the Earth. An image generated utilizing reflection seismology can show such edges of materials, which can be equated to positions in the Earth such that one may know where an edge of a material is in the Earth. For example, where the edge corresponds to a hydrocarbon reservoir, a method can include drilling to the reservoir in a manner guided by the position of the edge. As an example, a drilling process can be manual, semi-automated or automated where positional information as to an edge of a material in the Earth can be utilized to guide drilling equipment that forms a bore in the Earth where the bore may be directed to the edge or to a region that is defined at least in part by the edge. Where reflection seismology is improved, such an "edge" may be detected more readily and/or with greater accuracy (e.g., resolution), which, in turn, can improve one or more field processes such as a drilling process.

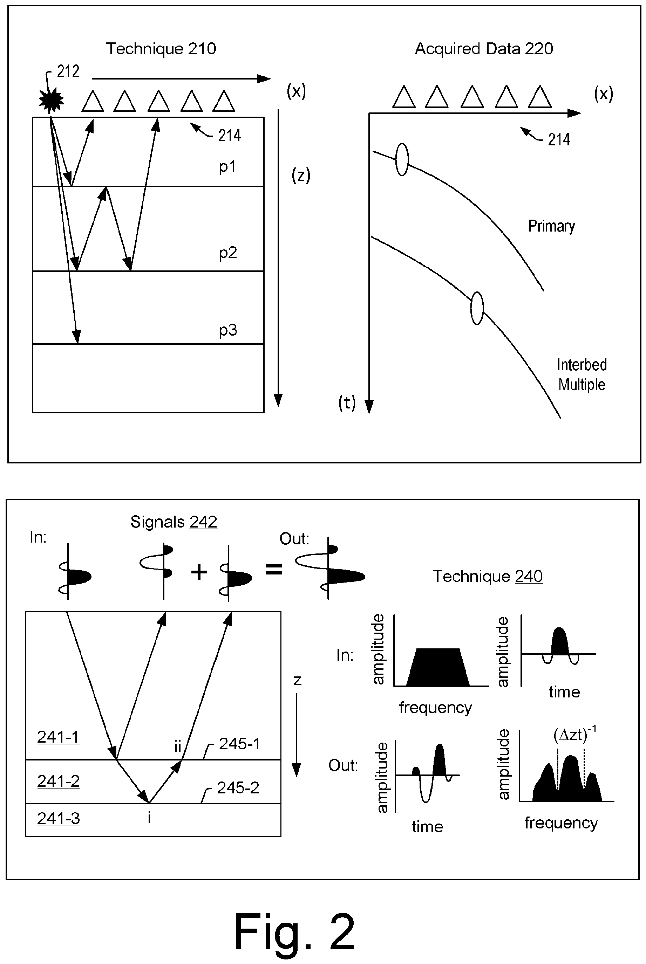

Fig. 2 shows an example of a technique 210 and acquired data 220, an example of a technique 240 and signals 242. As mentioned, a survey can include utilizing a source or sources and receivers. In the example technique 210, a source 212 is illustrated along with a plurality of receivers 214 that are spaced along a direction defined as an inline direction x. Along the inline direction x, distances can be determined between the source 212 and each of the receivers 214.

A subsurface region being surveyed includes features such a surface and subsurface horizons p1, p2 and p3 where one or more of such structural features can be interfaces where elastic properties can differ such that seismic energy is at least in part reflected. For example, a horizon can be an interface that might be represented by a seismic reflection, such as the contact between two bodies of rock having different seismic velocity, density, porosity, fluid content, etc. In the example of Fig. 2, the technique 210 is shown to generate seismic reflections, which can include singly reflected and multiply reflected seismic energy. The acquired data 220 illustrate energy received by the receivers 214 with respect to time, t, and their inline position along the x-axis. As shown, singly reflected energy can be defined as primary (or primaries) while multiply reflected energy can be defined as multiples such as surface multiples, interbed multiples (e.g., IM), etc.

A primary can be defined as a seismic event whose energy has been reflected once; whereas, a multiple can be defined as an event whose energy has been reflected more than once. With respect to seismic interpretation, whether manual, semi-automatic or automatic, various techniques may aim to enhance primary reflections to facilitate interpretation of one or more subsurface interfaces. In other words, multiples can be viewed as extraneous signal or noise that can interfere with an interpretation process. As an example, one or more method can utilize multiples to provide useful signals. For example, consider a seismic survey designed to increase seismic signal coverage of a subsurface region of the Earth through use of multiples.

Where multiples are considered undesirable, a process that aims to attenuate the presence of multiples (e.g., the presence of information in seismic data that corresponds to multiple energy) may include an adaptive subtraction process. An adaptive subtraction process can include modeling of multiples to generate a model (e.g., a multiples model) followed by subtracting the model from the acquired data. A technique that can be used for attenuation of multiples may be the extended internal multiple prediction (XIMP), which is a data-driven multiple-modeling approach for prediction of internal multiples from recorded events using wavefield extrapolation, for example, based on the Kirchhoff integral.

In Fig. 2, the technique 240 can include emitting energy with respect to time where the energy may be represented in a frequency domain, for example, as a band of frequencies. In such an example, the emitted energy may be a wavelet and, for example, referred to as a source wavelet which has a corresponding frequency spectrum (e.g., per a Fourier transform of the wavelet).

A wavelet can be a one-dimensional pulse defined by attributes such as, for example, amplitude, frequency and phase. A wavelet can originate as a packet of energy from a source point, having a specific origin in time, and be returned to one or more receivers as a series of events distributed in time and energy. The distribution is a function of velocity and density changes in the subsurface and the relative position of the source and receiver. Energy that returns cannot exceed what was input, so the energy in a received wavelet decays with time, for example, as more partitioning takes place at interfaces. Wavelets can also decay due to loss of energy as heat during propagation, which can be more extensive at higher frequencies. In various instances, received wavelets can tend to contain less high-frequency energy relative to low frequencies at longer traveltimes. Some wavelets are known by their shape and spectral content, such as the Ricker wavelet (e.g., a zero-phase wavelet such as the second derivative of the Gaussian function or the third derivative of the normal-probability density function).

As an example, a geologic environment may include layers 241-1, 241 - 2 and 241-3 where an interface 245-1 exists between the layers 241-1 and 241-2 and where an interface 245-2 exists between the layers 241-2 and 241-3. As illustrated in Fig. 2, a wavelet may be first transmitted downward in the layer 241-1; be, in part, reflected upward by the interface 245-1 and transmitted upward in the layer 241-1; be, in part, transmitted through the interface 245-1 and transmitted downward in the layer 241-2; be, in part, reflected upward by the interface 245-2 (see, e.g., "i") and transmitted upward in the layer 241-2; and be, in part, transmitted through the interface 245-1 (see, e.g., "ii") and again transmitted in the layer 241-1. In such an example, signals (see, e.g., the signals 262) may be received as a result of wavelet reflection from the interface 245-1 and as a result of wavelet reflection from the interface 245-2. These signals may be shifted in time and in polarity such that addition of these signals results in a waveform that may be analyzed to derive some information as to one or more characteristics of the layer 241-2 (e.g., and/or one or more of the interfaces 245-1 and 245-2). For example, a Fourier transform of signals may provide information in a frequency domain that can be used to estimate a temporal thickness (e.g., $\Delta zt$) of the layer 241-2 (e.g., as related to acoustic impedance, reflectivity, etc.).

As explained, interbed multiple signals may be received by one or more receivers over a period of time in a manner that acts to "sum" their amplitudes with amplitudes of other signals. In such an example, the additional interbed signals may interfere with an analysis that aims to determine one or more characteristics of the layer 241-2 (e.g., and/or one or more of the interfaces 245-1 and 245-2). For example, interbed multiple signals may interfere with identification of a layer, an interface, interfaces, etc. (e.g., consider an analysis that determines temporal thickness of a layer, etc.).

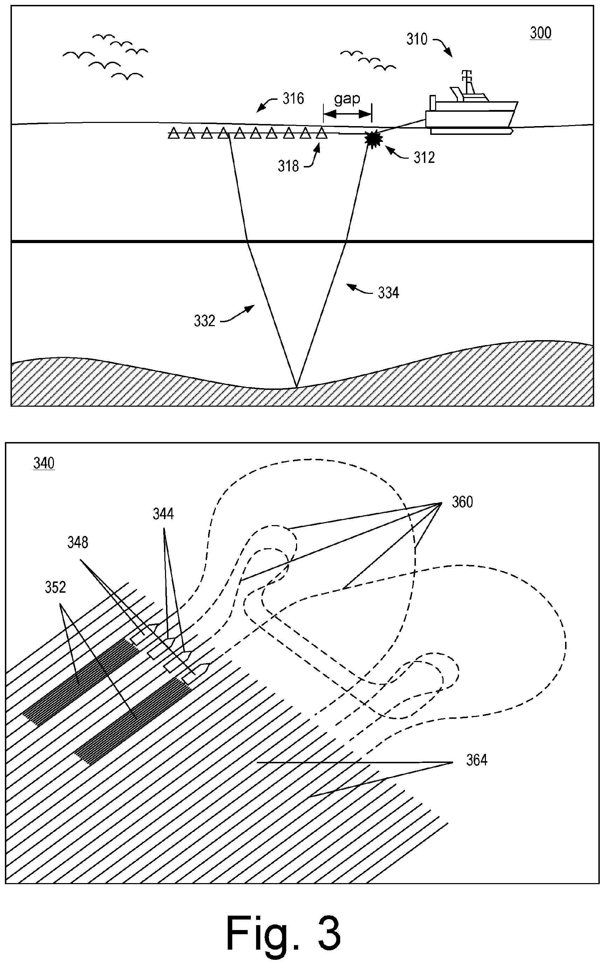

Fig. 3 shows an example of a simplified schematic view of a marine seismic acquisition system for a single vessel 300 and an example of a simplified schematic view of a marine seismic data acquisition system for multiple vessels 340.

In Fig. 3, the system 300 includes equipment 310, which can be a vessel that tows one or more sources 312 and one or more streamers 316 (e.g., with receivers 318). In the system 300, at least one of the one or more sources 312 of the equipment 310 can emit energy at a location and at least one of the receivers 318 of the equipment 310 can receive energy at a location. The emitted energy can be at least in part along a path of the downgoing energy 332 and the received energy can be at least in part along a path of the upgoing energy 334.

In various systems, for one or more reasons, a gap in coverage may exist. For example, in the system 300 a gap is identified and labeled where the gap may be defined as a distance between a seismic source and a seismic receiver. In such an example, the distance may be considered a practical or a safe distance for locating a seismic receiver from a seismic source. If a seismic receiver is too close to a seismic source, the seismic receiver may experience a rather large shock wave and/or may otherwise experience energy that may be quite high and raise concerns with calibration, dynamic range, etc.

In the system 340 of Fig. 3, one or more source vessels 340 may be utilized with one or more streamer vessels 348 or a vessel or vessels may tow both a source or sources and a streamer or streamers 352. As an example, a marine survey may utilize one or more types of receivers such as, for example, towed receivers on streamers and ocean bottom receivers on cables and/or nodes (e.g., OBCs and/or OBNs).

In the example of Fig. 3, the vessels 344 and 348 (e.g., or just the vessels 348 if they include sources) may follow predefined routes (e.g., paths) for an acquisition geometry that includes inline and crossline dimensions. As shown, routes 360 can be for maneuvering the vessels to positions 364 as part of the survey. As an example, a marine seismic survey may call for acquiring seismic data during a turn (e.g., during one or more of the routes 360).

The example systems 300 and 340 of Fig. 3 demonstrate how surveys may be performed according to an acquisition geometry that includes dimensions such as inline and crossline dimensions, which may be defined as x and y dimensions in a plane or surface where another dimension, z, is a depth dimension. As explained, time can be a proxy for depth, depending on various factors, which can include knowing how many reflections may have occurred as a single reflection may mean that depth of a reflector can be approximated using one-half of a two-way traveltime, some indication of the speed of sound in the medium and positions of the receiver and source (e.g., corresponding to the two-way traveltime).

Two-way traveltime can be defined as the elapsed time for a seismic wave to travel from its source to a given reflector and return to a receiver (e.g., at a surface, etc.). As an example, a minimum two-way traveltime can be defined to be that of a normal-incidence wave with zero offset.

As an example, a seismic survey can include points referred to as common midpoints (CMPs). In multichannel seismic acquisition, a CMP is a point that is halfway between a source and a receiver that is shared by a plurality of source-receiver pairs. In such a survey, various angles may be utilized that may define offsets (e.g., offsets from a CMP, etc.). In a CMP approach, redundancy among source-receiver pairs can enhance quality of seismic data, for example, via stacking of the seismic data. A CMP can be vertically above a common depth point (CDP), or common reflection point (CRP).

As an example, a seismic survey can include points referred to as downward reflection points (DRPs). A DRP is a point where seismic energy is reflected downwardly. For example, where multiple interfaces exist, seismic energy can reflect upwardly from one interface, reach a shallower interface and then reflect downwardly from the shallower interface. Referring to Fig. 2, the technique 210 is illustrated with p2 being deeper than p1 such that a DRP exists along p1.

As an example, a seismic survey may be an amplitude variation with offset (AVO) survey. Such a survey can record variation in seismic reflection amplitude with change in distance between position of a source and position of a receiver, which may indicate differences in lithology and fluid content in rocks above and below a reflector.

AVO analysis can allow for determination of one or more characteristics of a subterranean environment (e.g., thickness, porosity, density, velocity, lithology and fluid content of rocks, etc.). As an example, gas-filled sandstone might show increasing amplitude with offset; whereas, a coal might show decreasing amplitude with offset. AVO analysis can be suitable for young, poorly consolidated rocks, such as those in the Gulf of Mexico.

As an example, a method may be applied to seismic data to understand better how structural dip may vary with respect to offset and/or angle as may be associated with emitter-detector (e.g., source-receiver) arrangements of a survey, for example, to estimate how suitable individual offset/angle gathers are for AVO imaging. A gather may be a collection of seismic traces that share an acquisition parameter, such as a common midpoint (CMP), with other collections of seismic traces. For example, consider an AVO survey that includes a plurality of emitter-detector arrangements (e.g., source-receiver pairs) with corresponding angles defined with respect to a common midpoint (CMP). Given a CMP, acquired survey data may be considered to cover a common subsurface region (e.g., a region that includes the midpoint).

As an example, a method can include taking into account one or more considerations of offset and/or reflection point(s) for primaries and for multiples where, for example, one or more considerations may differ for a primary or primaries compared to a multiple or multiples. As mentioned, factors such as angles can differ for multiples as well as reflection point(s), as a multiple is associated with more than one reflection point. Such factors can be utilized to improve imaging, for example, by filling in a primary coverage gap, more closely approaching an object (e.g., a geobody), more closely approach an obstruction, etc.

As to a formation that is anisotropic, use of multiples may provide information that can be utilized to determine or otherwise characterize anisotropy. For example, anisotropy may be better characterized where information is acquired at one or more particular angles. In such an example, an angle of a multiple may be associated with energy passing through a layer of material in a manner that can elucidate type of anisotropy or, for example, having seismic data for more angles that provided by primaries alone can help to elucidate anisotropy. Anisotropy can be a variation of a property of a material with the direction in which it is measured. In rocks, variation in seismic velocity measured parallel and perpendicular to bedding surfaces can be indicative of anisotropy. However, in a seismic survey, angles directly parallel and directly perpendicular may not be readily available. As an example, use of one or more multiples may help to enhance angle coverage. As an example, certain types of multiples may be associated with a layer of material for which anisotropy is to be better understood. As an example, one or more multiples may be selected that are for seismic energy that passes multiple times through a layer, whether one a receiver side, a source side or a receiver side and a source side. As an example, a layer of material can include one or more platy minerals such as micas and clays that tend to align parallel to depositional bedding as sediments are compacted; noting that anisotropy tends to exist in various shales.

As an example, a multiple model of multiples models may be utilized for one or more purposes. For example, consider multiple attenuation where energy (e.g., signal) of various multiples is to be reduced. As another example, consider multiple analysis where a multiples model or multiples models may be analyzed for information that they may include (e.g., with respect to depth, acquisition quality, acquisition footprint, acquisition arrangement, structures, anisotropy, etc.).

As explained, in seismic surveying, a seismic source is used to produce seismic signals that are propagated into a subterranean structure. In some implementations, the seismic source can be in the form of a seismic vibrator, which has at least one moveable element that is actuated to oscillate between different positions to cause vibrations that cause production of seismic signals that are propagated into the subterranean structure.

As an example, a seismic vibrator can be configured to emit swept-frequency signals, where signals output by the seismic vibrator are swept from a first frequency to a second frequency, which may be from high to low, low to high or, for example, a random order. A signal sweep produced by a seismic vibrator may be an oscillating signal of a continuously varying frequency, for example, increasing or decreasing monotonically within a given frequency range. As an example, a frequency of a seismic sweep may start low and increase with time (an upsweep), a frequency may begin high and gradually decrease (a downsweep), or, as mentioned, a random approach may be utilized.

To produce a frequency sweep, control input to a seismic vibrator can include input signals that sweep across frequencies from a first frequency to a second frequency (e.g., a sweep range). In various instances, with swept-frequency signals, a short section of the output acoustic (seismic) signal from the seismic vibrator does not contain content from the entire sweep range, but is restricted to a smaller bandwidth.

As an example, rather than producing swept-frequency seismic signals, a seismic vibrator can produce a continuous seismic signal that has content over a predetermined frequency bandwidth that includes a range of multiple frequencies. For example, a substantial section (e.g., 50 percent or less) of a continuous seismic signal can have frequency content over substantially an entire predetermined bandwidth, in contrast to a swept-frequency signal where the bandwidth of that section will be smaller than the entire source bandwidth. For example, if the sweep-rate of the swept-frequency signal is constant, the bandwidth of half of the signal will be close to one half of the bandwidth of the entire signal. For non-linear sweeps, the fraction may be greater or less than half. During general land seismic vibrator acquisition, both the vibrator and the seismic receivers are stationary during the sweep; thus, all the data from one sweep corresponds to a single shot point and a single receiver point. In contrast to a land survey, as explained with respect to the examples of Fig. 3, seismic acquisition can occur where a vibratory source may be activated while either the source is moving, or at least some of the receivers are moving, or both. As explained, in a marine acquisition one or more sources can be towed behind a vessel, and the receivers may either be towed or stationary (e.g., consider ocean bottom nodes (OBNs)). Another example is transition zone acquisition where the source may be on-land and stationary and the receivers on the water and moving-or vice-versa. Moving sources and receivers are also possible on land-techniques according to some implementations are also applicable to such arrangements.

As used here, "continuous" is intended to refer to continuous or near continuous. A continuous seismic signal produced by the seismic vibrator in a seismic survey means that the seismic vibrator is continuously on (activated) during the seismic survey. However, continuous also refers to situations where the seismic vibrator is not activated during the entire seismic survey. For example, the seismic vibrator can be activated for a sufficiently long length of time such that the seismic vibrator continuously outputs a seismic signal for multiple shot points. In various types of surveys, shot points may be 25 meters apart. For example, if a marine vessel towing a seismic vibrator and seismic receivers covers 200 m while the seismic vibrator is outputting a signal, then eight different shot points are produced and thus the seismic vibrator in this example would be considered to produce a near-continuous seismic signal. In some implementations, a continuous seismic signal with content over a predetermined frequency bandwidth can be designed so that the auto-correlation of the signal drops off with time.

To activate a seismic vibrator according to some embodiments, a pilot signal having a predetermined waveform can be provided to the seismic vibrator. In some implementations, a pilot signal can be in the form of a time series (e.g., a time t, the output is f(t), where f( ) is a predefined function). A pilot signal can control actuation of a seismic vibrator. A continuous seismic signal output by a seismic vibrator generally follows a predetermined waveform of a pilot signal. In some implementations, control circuitry in a seismic vibrator may include a feedback control loop that attempts to minimize or reduce the difference between the pilot signal and the output signal (the continuous seismic signal) of the seismic vibrator.

In the examples of Fig. 3, the paths are illustrated as single reflection paths for sake of simplicity. In the environments illustrated, additional interactions, reflections can be expected. For example, ghosts may be present. A ghost can be defined as a short-path multiple, or a spurious reflection that occurs when seismic energy initially reverberates upward from a shallow subsurface and then is reflected downward, such as at the base of weathering or between sources and receivers and the sea surface. As an example, the system 300, the system 400, etc., can include one or more streamers that configured to position receivers a distance below an air-water interface such that ghosts can be generated where upgoing energy impacts the air-water interface and then reflects downward to the receivers. In such an example, a process may be applied that aims to "deghost" seismic data. Deghosting can be applied to marine seismic survey data where such a process aims to attenuate signals that are downgoing from an air-water interface (i.e., sea surface interface). As mentioned, one or more other techniques, technologies, etc., may be utilized for seismic surveying (e.g., ocean bottom cables (OBC), ocean bottom nodes (OBN), etc.).

Some examples of techniques that can process seismic data include migration and migration inversion, which may be implemented for purposes such as structural determination and subsequent amplitude analysis. In seismic exploration, signal can be defined as a part of a recorded seismic record (e.g., events) that is decipherable and useful for determining subsurface information (e.g., relevant to the location and production of hydrocarbons, etc.). Migration and migration inversion are techniques that can be used to extract subsurface information from seismic reflection data.

As an example, a migration technique can include predicting a coincident source and receiver at depth at a time equal to zero; an approach that may be extended for heterogeneous media and to accommodate two-way propagation in a local sense at points from the source to a target reflector and back from the reflector to the receiver and in a global sense, separately for each of the two legs from the source to the reflector and from the reflector to the receiver. Such an approach for two-way wave propagation migration may provide for quantitative and definitive definition of the roles of primaries and multiples in migration where, for example, migration of primaries can provide subsurface structure and amplitude information.

Various techniques that can be used to predict a wavefield inside a volume from (measured) values of a field on a surface surrounding the volume involve Green's theorem. Green's theorem may be implemented, for example, as part of a process for a finite volume model prediction of the so-called "source and receiver experiment" for two-way waves at depth. As an example, Green's theorem can predict a wavefield at an arbitrary depth z between a shallower depth "a" and a deeper depth "b".

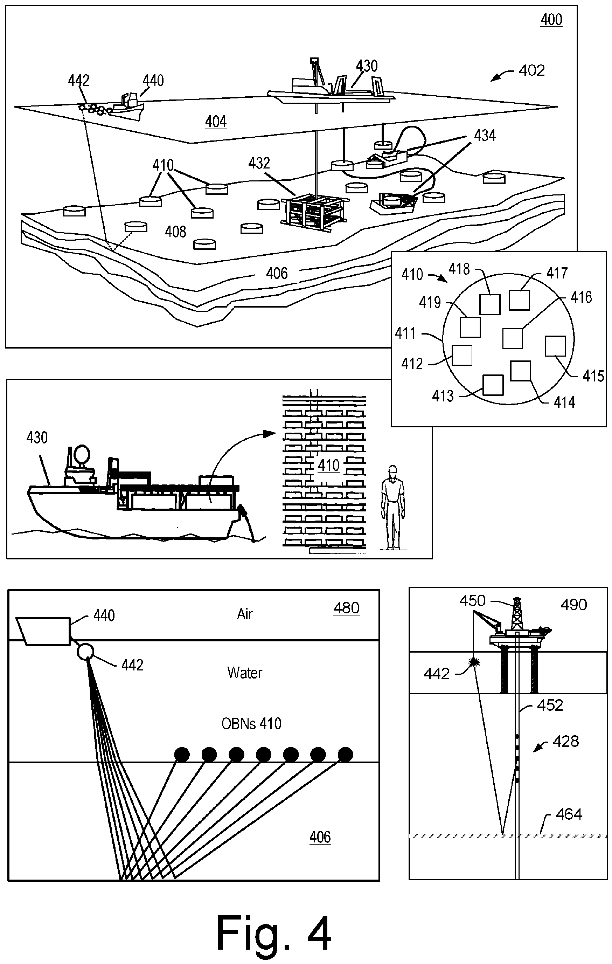

Fig. 4 shows a system 400 for acquisition of information in a geologic environment 402 that includes an air-water surface 404, a formation 406 and a seabed 408 (e.g., water-bed interface) where nodes 410 are positioned on the seabed 408. Equipment may be utilized to position the nodes 410 on the seabed 404 and retrieve the nodes 410 from the seabed 404. Such equipment may include one or more vessels 430, one or more carriers 432 and one or more vehicles 434, which may be autonomous, semi-autonomous, etc. (remotely operated vehicles (ROVs), etc.). The system 400 may include a seismic source vessel 440 that includes one or more seismic sources 442. The seismic source vessel 440 may travel a path while, at times, emitting seismic energy from the one or more sources 442. In such an approach, the nodes 410 can receive portions of the seismic energy, which can include portions that have travelled through the formation 406. Analysis of received seismic energy by the nodes 410 may reveal features of the formation 406.

In Fig. 4, the vessel 430 is shown as including nodes 410 as cargo arranged on racks. The nodes 410 can be deployed to form an array, for example, according to a survey plan. An array of nodes may be cabled or un-cabled. A cable may be relatively light weight and utilized to deploy a node receiver line with nodes coupled to the cable at spaced intervals. A rack can be utilized to securely store nodes in slots along multiple rows and columns. An individual slot may include a communications portal that can establish communication via contact(s) and/or contactless/wireless with an individual node seated in the individual slot for download of information, etc. A rack can include charger circuitry that can charge one or more batteries of an individual node seated in an individual slot. A node can be sealed such that components (circuitry, one or more batteries, etc.) are not exposed to water when the node is deployed on an underwater bed. A seal may be a hermetic seal that aims to prevent passage of air and/or water. A seal or seals can aim to prevent intrusion of water from an exterior region to an interior region of a node. Such a node can be considered to be water-tight. A sealed node can be a self-contained piece of equipment that can sense information independent of other equipment when positioned on an underwater surface that may be a seabed.

A rack may be dimensioned in accordance with shipping container dimensions such as about 3 meters by about 7 meters by about 3 meters. As shown in Fig. 4, with reference to a silhouette of a person that is about 1.8 meters in height, a node may be about a meter or less in diameter and about half a meter in height or less.

In Fig. 4, the one or more sources 442 may be an air gun or air gun array (a source array). A source can produce a pressure signal that propagates through water into a formation where acoustic and elastic waves are formed through interaction with features (structures, fluids, etc.) in the formation. Acoustic waves can be characterized by pressure changes and a particle displacement in a direction of which the acoustic wave travels. Elastic waves can be characterized by a change in local stress in material and a particle displacement. Acoustic and elastic waves may be referred to as pressure and shear waves, respectively; noting that shear waves may not propagate in water. Collectively, acoustic and elastic waves may be referred to as a seismic wavefield.

Material in a formation may be characterized by one or more physical parameters such as density, compressibility, and porosity. In the geologic environment 402 of Fig. 4, energy emitted from the one or more sources 442 can be transmitted to the formation 406; however, elastic waves that reach the seabed 408 will not propagate back into the water. Such elastic waves may be received by sensors of the nodes 410. The nodes 410 can include motion sensors that can measure one or more of displacement, velocity and acceleration. A motion sensor may be a geophone, an accelerometer, etc. As to pressure waves, the nodes 410 can include pressure wave sensors such as hydrophones.

In Fig. 4, the nodes 410 can include sensors for acquiring seismic wavefield information at the seabed 408. Each of the nodes 410 can include one or more hydrophones and/or one or more motion sensors (one or more geophones, one or more accelerometers, etc.).

A node can include various types of circuitry. Such circuitry can include circuitry that can digitize (analog to digital conversion ADC circuitry) and can include circuitry that can record signals (a microcontroller, a processor, etc., operatively coupled to memory). Each of the nodes 410 can include a housing 411, sensors 412 and 413, one or more microcontrollers or processors 414, one or more batteries 415, memory 416, ADC circuitry 417, a compass 418, communication circuitry 419, etc. As an example, a node can include one or more clocks, which may be amenable to calibration, synchronization, etc. For example, consider synchronizing to a signal, calibrating against a value, etc. As an example, a node can provide for receiving seismic energy and generating digital data that can be coded or otherwise stamped with information corresponding to time (e.g., according to one or more clocks). Various components of a node may be operatively coupled via wires, connectors, etc. A node can include one or more circuit boards (printed circuit boards, etc.) that can provide for electrical connections between various components, etc.

After deployment, one or more acoustic techniques may be utilized to determine node locations. A technique may employ acoustic pinging where acoustic pingers emit relatively high-frequency pings that are substantially above the maximum frequency of interest for seismic applications. Such relatively high-frequency acoustic signals can be picked up by one or more seismic sensors. Triangulation or one or more other techniques may be utilized to determine node locations for nodes deployed on an underwater surface such as a seabed.

Nodes may be utilized to acquire information spatially and temporally such as in a time-lapse seismic survey, which may be a four-dimensional seismic survey (4D seismic survey). A seismic image of a formation may be made for a first survey and a seismic image of the formation may be made for a second survey where the first and second surveys are separated by time (lapse in time). In such an approach, a comparison of the images can infer changes in formation properties that may be tied to production of hydrocarbons, injection of water or gas, etc.

A first survey may be referred to as a baseline survey, while a subsequent survey may be referred to as a monitor survey. To minimize artifacts in differences between seismic images from successive lapses, a monitor survey may aim to replicate a configuration of a corresponding baseline survey. Where nodes are utilized at various positions on a seabed for a baseline survey, a monitor survey may aim to place nodes on the seabed in a manner that replicates the various positions of the nodes of the baseline survey. For the monitor survey, the nodes may be the same nodes, include some of the same nodes, include some different nodes or may be different nodes. A service may have a stock of nodes that can be utilized for various surveys where once a survey is complete, the nodes are retrieved, transported and positioned for another survey. Such a service may update, replace, etc., nodes from time to time.

A position to within a few meters of accuracy of one or more nodes may be determined via one or more of GPS, an acoustic positioning system (a short-baseline (SBL) or ultra-short baseline (USBL) acoustic system), and one or more other types of systems.

A node can include sensor circuitry for acquiring measurements of a seismic pressure wavefield and its gradient; consider sensor circuitry that can measure a seismic pressure wavefield and its gradient in vertical and crossline directions.

A node can include point-receiver circuitry. A point-receiver approach can combine hydrophones with tri-axial microelectromechanical system (MEMS) accelerometers. In such an approach, the MEMS accelerometers can measure a substantial bandwidth of particle acceleration due to seismic wavefields. Measurements of particle acceleration can be directly related to a gradient in a pressure wavefield. A node may include the ISOMETRIX technology, which includes point-receiver circuitry (Schlumberger Limited, Houston, Texas).

In the example of Fig. 4, one of the nodes 410 may be connected to one or more other nodes of the nodes 410 via a cable. A vessel may include a cable that is operatively coupled to at least one node. In the system 400 of Fig. 4, nodes may be deployed according to a survey plan in a grid pattern; consider placement of nodes on a seabed according to an x,y grid where distance between adjacent nodes may be of the order of hundreds of meters. As shown in the system 400, the seismic source vessel 440 may be employed with the one or more sources 442 that can emit energy, which can, in turn, be received via one or more of the nodes 410.

As an example, a common shot approach 480 may be utilized, as illustrated via the formation 406, the OBNs 410, the seismic source vessel 440 and the one or more sources 442. As explained, the vessel 440 can tow one or more sources at or below an air-water interface where the OBNs 410 can be positioned on a water-formation interface (e.g., a seafloor, seabed, ocean bottom, sea bottom, etc.). As shown, the energy of the source or the sources 442 passes through the water and then into the formation 406 where a portion of the energy is reflected at an interface (e.g., a reflector). As shown, energy can reflect off the interface and progress upwardly to the OBNs 410, which can be receivers that record the energy.

When seismic traces of a gather come from a single shot and many receivers, they can form a common shot gather; whereas, a single receiver with many shots can form a common receiver gather. A shot gather is a plot of traces with respect to line distance (e.g., an inline or a crossline series of receivers) with respect to time. Such a plot may be referred to as an image, which includes information about a subsurface region; noting that traces may be processed to generate one or more other types of images of a subsurface region.

Also shown in Fig. 4 is an inset of a zero-offset vertical seismic profile (VSP) scenario 490. In such a scenario, an acquisition geometry may be limited to an ability to position equipment that is physically coupled to a rig 450. As shown, for given the acquisition geometry, there may be no substantial offset between the source 442 and a bore 452. In such a scenario, a zero-offset VSP may be acquired where seismic waves travel substantially vertically down to a reflector (see the layer 464) and up to receivers 428, which may be a receiver array. Where one or more vessels are employed, one or more other types of surveys may be performed. A three-dimensional VSP may be performed using a vessel. As an example, a VSP may be performed using one or more nodes, etc.

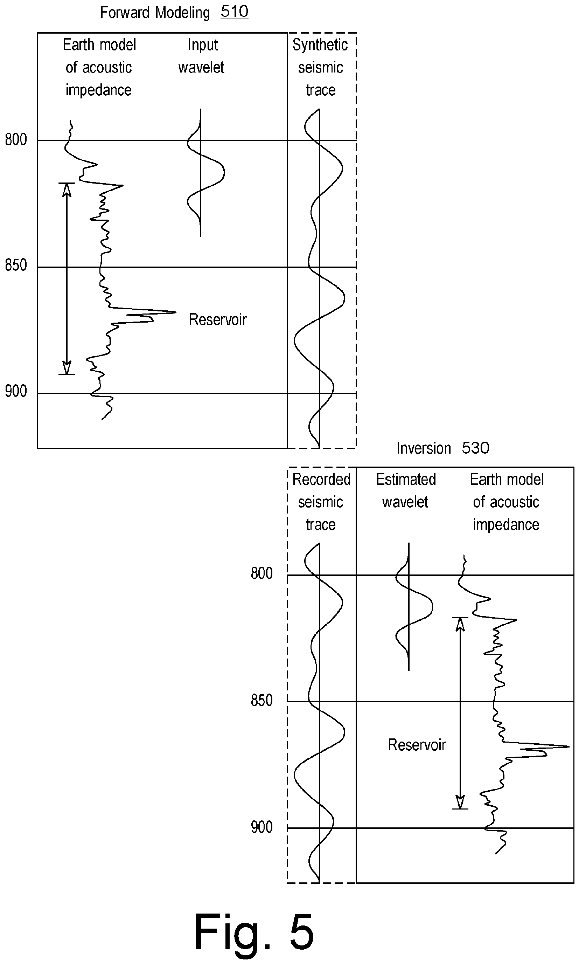

Fig. 5 shows an example of forward modeling 510 and an example of inversion 530 (e.g., an inversion or inverting). As shown, the forward modeling 510 progresses from an earth model of acoustic impedance and an input wavelet to a synthetic seismic trace while the inversion 530 progresses from a recorded seismic trace to an estimated wavelet and an Earth model of acoustic impedance. As an example, forward modeling can take a model of formation properties (e.g., acoustic impedance as may be available from well logs) and combine such information with a seismic wavelength (e.g., a pulse) to output one or more synthetic seismic traces while inversion can commence with a recorded seismic trace, account for effect(s) of an estimated wavelet (e.g., a pulse) to generate values of acoustic impedance for a series of points in time (e.g., depth).

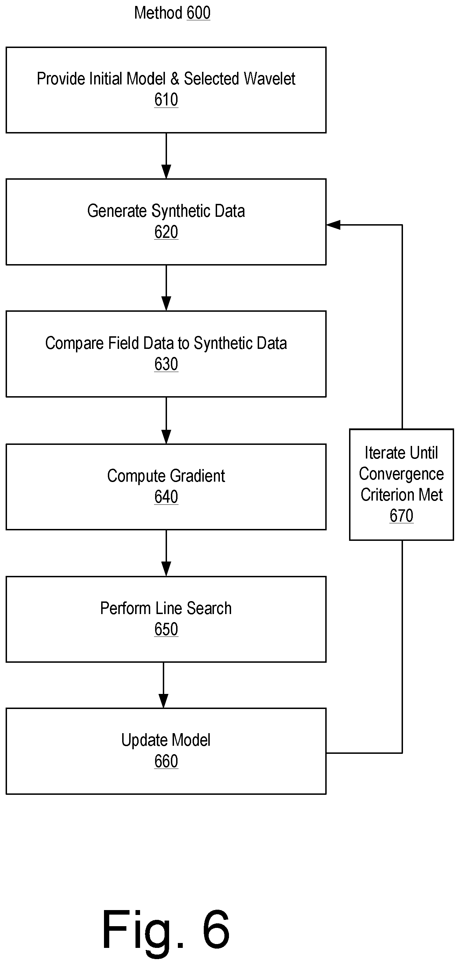

Fig. 6 shows an example of a method 600 that can perform a full waveform inversion (FWI). As shown, the method 600 includes a provision block 610 for providing an initial model and a selected wavelet, a generation block 620 for generating synthetic seismic data using the model and the wavelet, a comparison block 630 for comparing the synthetic seismic data to field seismic data, a computation block 640 for computing a gradient, a performance block 650 for performing a line search and an update block 660 for updating the model to provide an updated model, which may then be used by the generation block 620. As shown, per an iteration block 670, the method 600 can proceed in an iterative manner until one or more convergence criteria are met, which may be based on error between synthetic seismic data and field seismic data. As an example, the method 600 may be implemented by a computational framework such as, for example, the OMEGA framework.

While Fig. 6 shows an example of a FWI technique, other types of iterative inversion techniques include, for example, least-squares reverse time migration (LS-RTM) and image domain inversion (IDI).

As an example, a method can include processing continuous source seismic data for one or more shot-domain imaging methods. In various imaging applications that involve iteration inversion (e.g., FWI, LS-RTM, IDI), a framework may operate using raw data rather than processed or interpolated data. However, continuously recorded seismic data where frequency and duration of energy can be controlled and varied differs from point source data. As an example, a framework can include features for implementing a method that can break continuous seismic data into smaller pieces for inversion or imaging.

Examples of approaches for breaking a long continuous shot into smaller shots for inversion can include a data-domain approach that involves localization by weighting and/or windowing, and a model-domain approach that can leverage one or more existing point-source reconstruction techniques.

A data-domain approach can be simpler and involve explicitly modelling residual shot noise. Such an approach can proceed without relying on an ability to deconvolve point-source responses from sweep data; however, such an approach can become expensive if a localization window becomes too small. As to a model-domain approach, it can presuppose that point sources can be reconstructed to some extent, and then re-synthesized into subsets of the original data, such that the reconstructed subsets are consistent with independent seismic experiments. A model-domain approach can allow for more flexible processing flows as one or more processing actions (e.g., techniques, workflows, etc.) designed for point-source data can be applied, for example, consider one or more types of multiple removal workflows. As an example, a method can provide for mode handling (e.g., modes of multiples, etc.). As an example, a method can provide for handling of receiver side mode separation. For example, consider an OBN or OBC type of survey where upgoing and downgoing wavefields can be separated and optionally recombined. In such an example, components of a wavefield may be modelled, optionally separately.

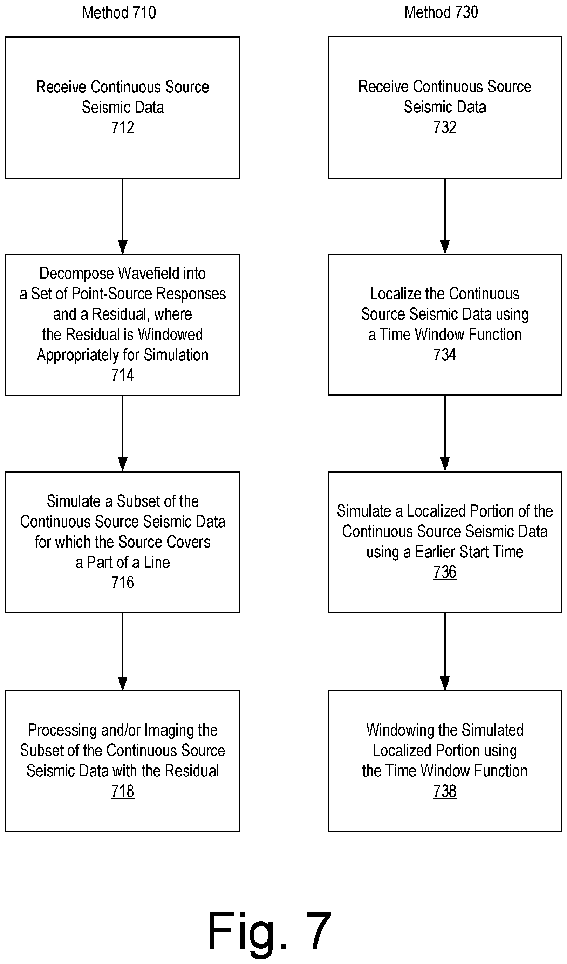

Fig. 7 shows example methods 710 and 730. As shown, the method 710 can include a reception block 712 for receiving continuous source seismic data that represents a wavefield of a seismic survey; a decomposition block 714 for decomposing the wavefield into a set of point-source responses and a residual, where the residual is windowed appropriately for simulation; a simulation block 716 for simulating a subset of the continuous source seismic data for which the source covers a part of a line of the seismic survey; and a processing and/or imaging block 718 for processing and/or imaging the subset of the continuous source seismic data with the residual.

As an example, a method can involve taking a continuous source seismic data record; decomposing the wavefield into a set of point-source responses and a residual; simulating a subset of the continuous source seismic record for which the source was only covering part of a line; and processing or imaging the subset of the continuous source seismic record. In such an example, the residual can be windowed by an amount appropriate for a subset for simulation where the residual can be added to the subset of the continuous source seismic record, before imaging and/or processing. As an example, signal and coherent noise components of a set of point-source responses can be separated so that a re-synthesized subset (e.g., per block 718) does not contain the noise components. As explained, a method can involve performing various actions in a point-source domain and various actions in a continuous domain. For example, inversion of a continuous source seismic data record can be performed in a continuous domain. In such an example, the residuals may be initially from a point-source domain. By adding the residuals, information can be preserved, acknowledging that a point-source type of transformation can be to some extent imperfect (e.g., certain aspects imperfectly fit) such that residuals include useful information (e.g., some amount of signal, how good of a fit, etc.). As an example, one or more of various actions can be performed in a point-source domain for a continuous source seismic data record that has been broken up into portions while still maintaining residual information in memory of a computational system (e.g., a computational framework). In such an example, upon return to a continuous domain, the residual information can be introduced, which can help to improve accuracy of a method. As an example, one or more aspects of a method may be tuned using one or more analyses of residuals. As an example, where residuals are sufficiently low, a method may decide to continue in a point-source domain without transferring back to a continuous domain.

As to the method 730 of Fig. 7, it can be for a data-domain (e.g., a data-domain approach). The method 730 can provide for imaging continuous source seismic. As shown in Fig. 7, the method 730 includes a reception block 732 for receiving continuous source seismic data; a localization block 734 for localizing the continuous source seismic data using a time window function; a simulation block 736 for simulating a localized portion of the continuous source seismic data using an earlier start time (e.g., earlier than an earliest time of the time window function); and a window block 738 for windowing the simulated localized portion using the time window function.

As an example, a method can include taking a continuous source seismic data record; localizing the continuous source record with a time window, where the localized continuous source record contains energy that was emitted from the source at times before and during the time window; simulating a localized continuous source record by modeling, starting from a time earlier than the start of the time window, so that most of the energy in the localized continuous source record is modelled accurately (e.g., via simulation); and windowing the simulated localized continuous source record with the same window function as applied to the continuous source record (e.g., such that the portions of actual data and simulated data or synthetic data overlap, for example, with a common start time and a common end time).

As an example, a method may be appropriately tuned and executed. For example, tuning can involve appropriate application of the time window function to the continuous source seismic data record such that the amount of time injected by the use of the earlier time does not result in an amount of time that is excessive, for example, compared to a length of the continuous source seismic record. For example, if a continuous source seismic record (e.g., seismic data) is 4000 seconds (66 minutes) and a window is 100 seconds with an earlier time introduced of 100 seconds, then the approach would effectively double the 4000 seconds to 8000 seconds. As such, a window can be sufficiently long (time duration) and, comparatively, an early time can be a fraction of the window (e.g., consider a 100 second window with an early time of 20 seconds). Portion size can depend on one or more of various factors. For example, a window may be in a range from a few seconds to 100 seconds or more. While 100 seconds is given as an example, a window may be 5 seconds to 10 seconds, for example, to generate 400 to 800 portions. As an example, a window size (e.g., duration) can be selected as appropriate, where 100 seconds may be considered to be relatively long and a window size of approximately 10 seconds to approximately 20 seconds for many instances, which may be a general default range (e.g., generally not too short and not too long).

As an example, a window may depend on operation of a continuous source. For example, consider a sweep time as a lower limit or otherwise for synchronization of portions with sweep intervals. However, in various examples, a continuous source can be an array of vibrators which may operate at different repeat frequencies, in different manners, etc., such that there is not a general periodicity of the continuous source. As mentioned, a random sweep approach may be used rather than a deterministic sweep approach. If each element in the array uses an independent random sweep, this will affect the directionality of the source in the far-field and, in some instances, may make the point-source decomposition more challenging.

As explained, an early time can be utilized for purposes of performing a simulation where the simulation can include emitting energy by a continuous source that is moving (e.g., along a line of a seismic survey) such that the energy is received at one or more receiver locations during a period of time (e.g., with a later start time) that corresponds to a portion of seismic data. In other words, an early time can account for the fact that energy in a period of time of seismic data originates from energy emission(s) by a source where some amount of time passes before such energy emission(s) reflect and arrive at one or more receivers. Simulation results can then be windowed to correspond to a portion of continuous source seismic data.

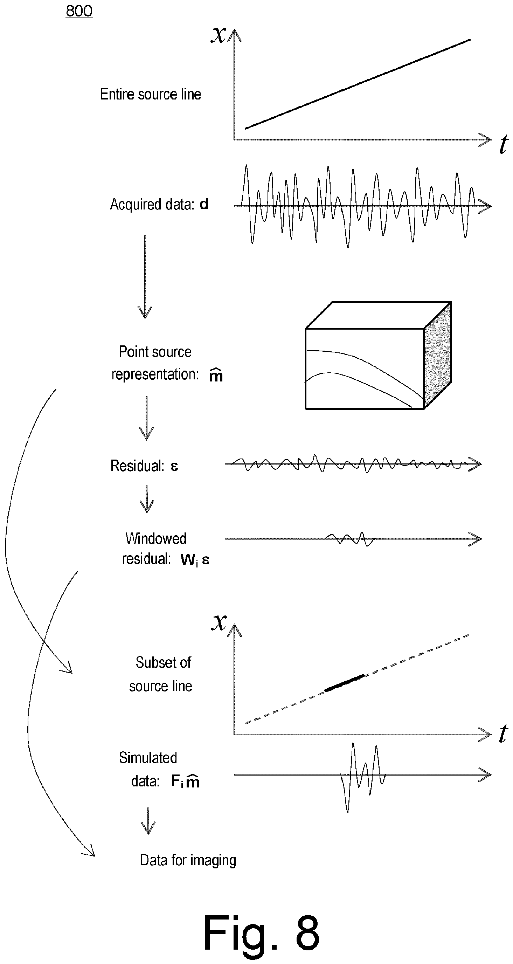

Fig. 8 shows an example of a method 800 that can include acquiring continuous source seismic data (d) for an entire source line (e.g., a moving continuous source that moves along a line of a seismic survey), transforming the data into a point-source representation ($\hat{\mathbf{m}}$) in a manner that generates a residual (e.g., residual error, $\varepsilon$), windowing the residual ($\mathbf{W}_i\varepsilon$), selecting a subset of the source line, simulating the subset of the source line to generated simulated data ($\mathbf{F}_i\hat{\mathbf{m}}$), and imaging using the simulated data and the windowed residual (e.g., data for imaging).

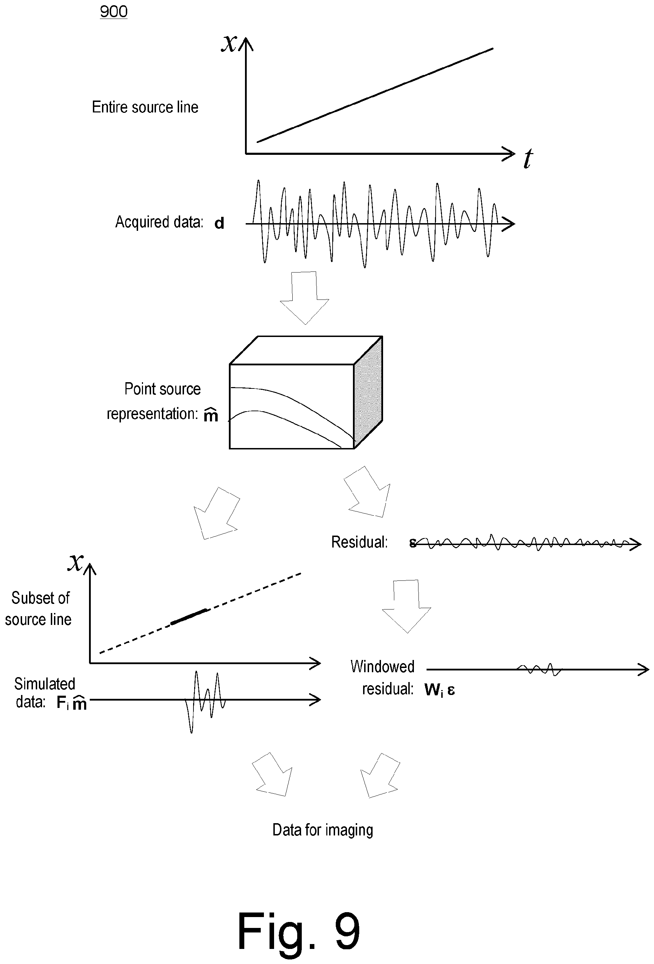

Fig. 9 shows an example of a method 900 that includes the actions of the method 800, with some rearrangement. In the examples of Fig. 7, 8, and 9, parallel processing may be implemented for one or more portions of continuous source seismic data. For example, continuous source seismic data can be broken into subsets and windowed residuals in a parallel manner, which may act to expedite processing and, for example, image generation. For example, one or more parallel processing techniques may be employed. A parallel processing technique may employ multiple processing cores (e.g., CPU cores, GPUs, etc.) where results therefrom may be combined. In such an example, stability may be improved compared to processing an entire line of continuous source seismic data. For example, stability may be improved for processing portions of a line of continuous source seismic data.

As an example, a process that breaks up a line of continuous source seismic data can be described with respect to aperture, which is an area of a geologic region that is being recorded (e.g., surveyed). For example, consider a sail line of a survey that is 10 km long. In such an example, a buffer region can be extended around the sail line (e.g., to represent some spread of energy). When breaking up the 10 km long continuous source seismic record, which may have a time length of 4000 seconds (66 minutes), into portions, each of the portions can have a corresponding time length and a corresponding aperture. As explained, an early time can be used as a type of buffer for simulation, which can also be a type of aperture buffer as the continuous source is moving in time. As an aperture can tend to be relatively large, the additional area added by an early time tends to be a small fraction of the aperture.

Computational demand of an imaging process can depend on the volume of a geologic region being imaged along with the number of time samples. For example, a 4000 second continuous source seismic data record for a line of a survey with an aperture of 10 km by 1 km can have an associated cost. In such an example, if the 4000 second record is broken into 10 second portions, then the aperture can be reduced such that volume is reduced and hence computational demand. As an example, a sail line may be greater than 10 km, for example, consider a 50 km sail line with an aperture that extends 10 km from each side of the sail line. In such an example, each portion of the record can be approximately 10 km by 20 km rather than 70 km by 20 km (e.g., 70 km from 10 km on each end of the 50 km sail line). Aperture can depend on various factors, such as, for example, depth of a target (e.g., a structure or structures in a geologic region).

For imaging applications that involve iteration inversion, it can be advantageous to work with raw data rather than processed or interpolated data. The principal reasons are concerned with data integrity. Firstly, imperfect reconstruction can lead to inconsistencies between modelled and observed data that can degrade an inversion process; secondly, as a model-space is generally smaller than a prestack data space, the inverse problem is often better posed in model-space than data-space. Furthermore, thirdly, for some problems reconstruction can also expand the volume of data to be inverted which can make the inversion process more computationally expensive.

As explained, marine vibrator data can be acquired as a continuous sweep. As an example, a vibrator may be continuously emitting such that there are no quiet periods between sweeps. A general processing route for this kind of data would be to use the marine vibrator data to estimate equivalent impulsive data. For example, consider doing so using correlation, source (and receiver) motion correction, interpolation, using simultaneous source methods, or by an inversion that includes these effects together.

Unfortunately processing the data in such a manner can encounter the three issues mentioned above. For example, as such a manner involves estimating a completely new set of data to invert, the integrity of the measurements is lost. Specifically, estimates of a broadband set of Green's functions from spatially aliased data that overlaps in time are involved, which pose a poorly determined problem that requires heuristic constraints to solve. Also, the volume of data (and imaging time) increases dramatically, because the raw acquisition cuts corners on spatial sampling and with regards to residual shot noise.

From both a data integrity and floating-point operations per second (FLOP) count perspective, it would be beneficial to be able to image a marine-vibrator survey in wall-clock time rather than on a shot-point by shot-point basis. Unfortunately, a 10 km sail line with a source vessel travelling at 2.5m/s requires imaging a 4000 second shot record. Imaging such a long shot record can be difficult to parallelize efficiently, can be more susceptible to stability issues, and can make inefficient use of aperture. As explained, a method or methods can provide for breaking data up into smaller chunks in such a way that the chunks represent consistent physical experiments so that they can be inverted in a consistent way.

Various FWI and LS-RTM algorithms rely on batch-sampling or stochastic gradient methodologies. Both of these approaches calculate model updates from a residual calculated from solely a small part of the observed data. It is normally considered that the observed data consists of separate shots for which residuals can be calculated separately. For marine vibrator data this is not the case.

As explained with respect to Fig. 7, the method 710 and the method 730 can each provide for breaking a long continuous shot into smaller shots for FWI and/or another form of inversion. As explained, a method can include localization by weighting in the data-domain and another method can include a model-domain approach which leverages conventional point-source reconstruction techniques. As an example, such methods may be utilized in combination.

As to the data-domain approach, it can be more straightforward and not rely on the ability to deconvolve point-source responses from sweep data; however, it can become expensive if one or more localization windows become too small. As to the model-domain approach, it presupposes that point sources can be reconstructed to some extent, but then allows for a more flexible processing flow (e.g., consider multiple removal, etc.).

As to localization by weighting, consider the example method 730 of Fig. 7 where one way of breaking up the continuous record is to apply a weighting function that localizes a subset of the data. In such an example, if it involves minimizing the difference between the observed data and a potentially nonlinear modelling operator, then it may minimize an objective function of the form:

$$\chi = \|\mathbf{d} - g_{0 \to T}(\mathbf{m})\|_2^2 + \lambda(\mathbf{m}),$$

where $\mathbf{d}$ is the vibroseis data, $\mathbf{m}$ is a model representation, $g_{0 \to T}$ is the forward modelling operator for the entire continuous record from $t = 0$ to $t = T$, and $\lambda(\mathbf{m})$ is a constraint term.

To localize the source function, a method can utilize the fact that the Green's functions are effectively compact in time: They are causal so have no amplitude before time zero, and their energy decays so that it is possible to define a maximum time ($t_{max}$) after which the Green's functions have effectively zero amplitude. This could be, for example, 10 s to 20s, but could be considered less than this if early arrivals dominate the amplitude profile of the Green's functions.

As an example, a method can include defining a weighting function ($\mathbf{W}_{t1 \to t2}$) that zeros the data outside a range ($t_1 < t < t_2$), such that the method can model part of the data at reduced cost, since:

$$\mathbf{W}_{t_1 \to t_2} g_{0 \to T}(\mathbf{m}) = \mathbf{W}_{t_1 \to t_2} \, g_{t_1' \to t_2}(\mathbf{m}),$$

where $t_1' = t_1 - t_{max}$.

Such an approach facilitates an inversion strategy in which local windows can be inverted separately with an objective function of the form, for example:

$$\chi_{t_1 \to t_2} = \left\|\mathbf{W}_{t_1 \to t_2}\left[\mathbf{d} - g_{t_1' \to t_2}(\mathbf{m})\right]\right\|_2^2 + \lambda(\mathbf{m}),$$

In such an approach, a method can then model corresponding to different windows that can then be merged together, or combined into a single objective function.

The aforementioned approach can also facilitate batch-sampling and stochastic gradient methodologies, since the data misfit component of the total objective function, $\chi$, can be broken up into $N$ smaller independent chunks:

$$\chi = \sum_{i=0}^{N-1} \left\| \mathbf{W}_{t_i \to t_{i+1}} \left[ \mathbf{d} - g_{t_i' \to t_{i+1}}(\mathbf{m}) \right] \right\|_2^2 + \lambda(\mathbf{m}),$$

where $t_0 = 0$, $t_N = T$, and $t_i > t_j$ for $i > j$.

In such an approach, model updates can be computed based on the independent subsets of the data, which may reduce demand for models corresponding to different windows to be merged together after the fact. Such a process is efficient as long as $t_2 - t_1 \gg t_{max}$; however, if the length of the window $(t_2 - t_1)$ is comparable to $t_{max}$, then there may be substantial redundant computation.

As to an example method that involves re-synthesis of continuous source data, consider the method 710 of Fig. 7. As explained, such a method can involve decomposition, for example, decomposing a wavefield into Green's function estimates where such estimates can be processed such that the method can re-synthesize subsets of continuous source data. These subsets could represent smaller independent continuous source experiments, and they could contain particular components of the wavefield.

As an example, a re-synthesis approach can start from a general approach of estimating the Green's functions **(m)** from the vibroseis data **(d)**. In such an example, the idealized linear forward problem can be represented as:

$$\mathbf{d} = \mathbf{Fm}.$$

The forward problem can be inverted to estimate the Green's functions using a constrained approximate inverse to **F:**

$$\hat{\mathbf{m}} = \mathbf{F}^\dagger \mathbf{d}.$$

In such an example, the data now consist of a component that fits a model, and a residual:

$$\mathbf{d} = \mathbf{F}\hat{\mathbf{m}} + \boldsymbol{\varepsilon}$$

Now a method can break up the modelling operator to model arbitrary contiguous chunks of the total trace:

$$\mathbf{F} = \sum_{i=0}^{N-1} \mathbf{F}_{t_i \to t_{i+1}}$$

Such an approach allows for modelling synthetic data of short temporal extent:

$$\mathbf{d}_{t_i \to t_{i+1}} = \mathbf{F}_{t_i \to t_{i+1}} \hat{\mathbf{m}}.$$

Note that the foregoing is a representation of the data that would be acquired if the source was only active in the time between $t_i$ and $t_{i+1}$. This is different from the windowed data, i.e., $\mathbf{d}_{t_i \to t_{i+1}} \neq \mathbf{W}_{t_i \to t_{i+1}} \mathbf{d}$, although as the window length gets longer the effect of windowing is reduced.

In such an example, there can still be a loss of some data integrity; noting that the residual energy that fails to be estimated in $\hat{\mathbf{m}}$ can be lost from later processing stages. To improve such an approach, as explained, a method can add-back the residual in to the synthetic data, which finds use in data-processing steps that do not create new traces, such as denoising, demultiple or deghosting.

As explained, rather than adding back an entire residual into each chunk, however, a method can appropriately window the residual. For example, if a method operates with chosen windowing operators, $\overline{\mathbf{W}}_i$ such that $\overline{\mathbf{W}}_i\mathbf{F} \cong \mathbf{F}_i$, then the method can create chunks of data with:

$$\mathbf{d}_i = \mathbf{F}_i\hat{\mathbf{m}} + \overline{\mathbf{W}}_i\varepsilon$$

In such an approach, anything that fits with the model is handled appropriately, and anything that does not is handled with a sensible windowing strategy (e.g., consider an option of choosing $\overline{\mathbf{W}}_i = \mathbf{W}_{t_i \to t_{i+1}}$.)

As mentioned, as the size of the chunks gets bigger, the effects of windowing become less relevant, and when the chunk is greater than ten nominal shot points or so, a method may proceed without modelling and rely purely on windowing, such that:

$$\mathbf{d}_i = \overline{\mathbf{W}}_i\mathbf{d}.$$

In the event that the separation is perfect, a method can go to smaller and smaller batches until it reaches the limit that the windowed sources become a series of impulses along the path of the source.

Re-synthesizing small chunks of data in the foregoing manner also facilitates batch-sampling or stochastic gradient methodologies since it allows the data to be divided up into small subsets. Furthermore, it can overcome the computational redundancy noted in the localization by weighting approach above.

Prior to re-synthesis, Green's function estimates may be processed (e.g., to remove coherent noise such as multiples). Alternatively, a coherent noise estimate could be re-synthesized from the Green's functions, and subtracted from the data. Either of these approaches can allow for coherent noise to be removed from the data in the continuous source domain, allowing a simpler inversion or imaging algorithm to be applied, for example RTM which has an implicit multiple-free assumption.

As an example, a re-synthesis approach may also be beneficial for FWI-imaging (where reflectivity is estimated from FWI-updated velocity models), as this approach demands that a processing and imaging workflow appropriately handles multiples and other source generated noise, such that they do not contaminate the velocity model updates and the estimated reflectivity.

As an example, continuous source seismic data may be acquired using a continuous "pop-corn" airgun and/or a marine vibrator. As an example, a marine vibrator can include multiple sources assembled in proximity that can be designed and/or programmed to emit one or more of various frequencies, which may vary with respect to time.

As an example, one or more data-fitting imaging techniques (FWI, L2-RTM) may utilize a localization by weighting approach and/or a re-synthesis approach. For example, imaging methods based on deconvolving (or even correlating) a source wavefield from a receiver wavefield (e.g., RTM, RTM+MDD) may benefit from applying a re-synthesis approach. As to use of one or more windows, a window may be defined to have smooth tapers at its start and/or at its end.

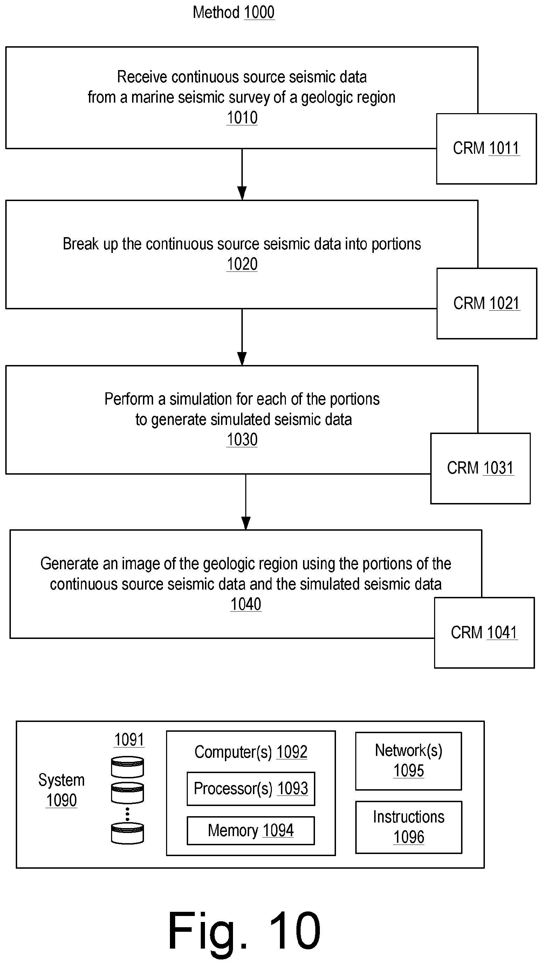

Fig. 10 shows an example of a method 1000 and an example of a system 1090 that can be a computational framework for performing one or more actions of the method 1000. As shown in Fig. 10, the method 1000 can include a reception block 1010 for receiving continuous source seismic data from a marine seismic survey of a geologic region; a break up block 1020 for breaking up the continuous source seismic data into portions; a performance block 1030 for performing a simulation for each of the portions to generate simulated seismic data; and a generation block 1040 for generating an image of the geologic region using the portions of the continuous source seismic data and the simulated seismic data.

As an example, an interpretation process, machine and/or human, may operate on images or image data to facilitate structure recognition. For example, consider an iterative segmentation process that can segment image data to identify one or more structural features in a subsurface environment, where, for example, hydrocarbons may be likely to exist or proven to exist. As an example, a recognition, segmentation, interpretation, etc., type of process may operate iteratively where results can be rendered to a display such that a user may see one or more structures being more particularly identified as being improved via iterative iteration. As an example, identified structure(s) can be utilized in model building. For example, consider building an earth model that can be suitable for use in simulating one or more physical phenomena using one or more simulators.

Fig. 10 also shows various computer-readable media (CRM) blocks 1011, 1021, 1031 and 1041. Such blocks can include instructions that are executable by one or more processors, which can be one or more processors of a computational framework, a system, a computer, etc. A computer-readable medium can be a computer-readable storage medium that is not a signal, not a carrier wave and that is non-transitory. For example, a computer-readable medium can be a physical memory component that can store information in a digital format.

In the example of Fig. 10, a system 1090 includes one or more information storage devices 1091, one or more computers 1092, one or more networks 1095 and instructions 1096. As to the one or more computers 1092, each computer may include one or more processors (e.g., or processing cores) 1093 and memory 1094 for storing the instructions 1096, for example, executable by at least one of the one or more processors. As an example, a computer may include one or more network interfaces (e.g., wired or wireless), one or more graphics cards, a display interface (e.g., wired or wireless), etc. The system 1090 can be specially configured to perform one or more portions of the method 1000 of Fig. 10. As an example, instructions as in the blocks 1011, 1021, 1031 and 1041 may be included in the instructions 1096 as part of a framework such as, for example, a continuous source reflection seismology framework. Such a framework may be part of a larger framework that can include features for handling seismic survey data, generating images, generating models, etc.

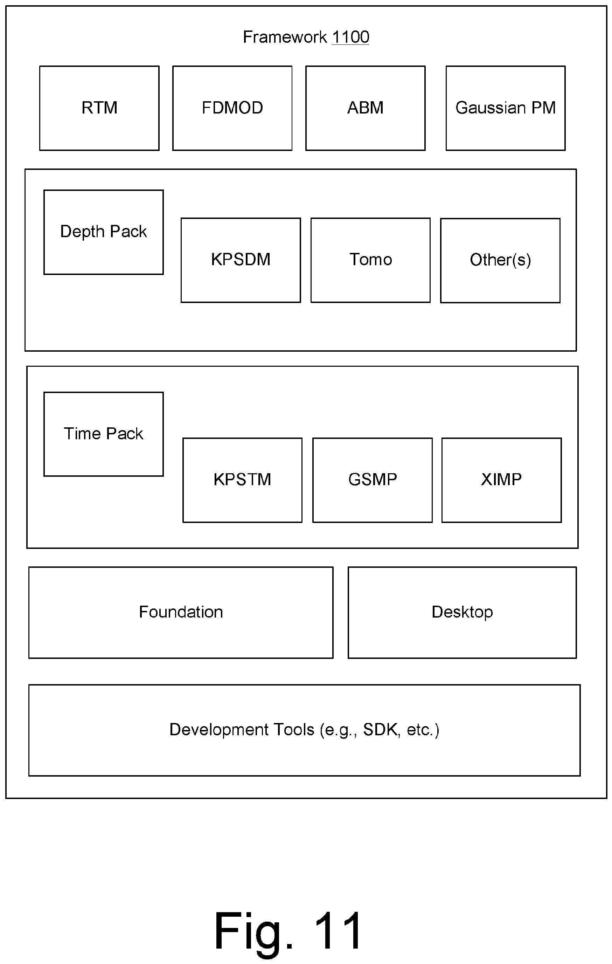

Fig. 11 shows an example of a computational framework 1100 that can include one or more processors and memory, as well as, for example, one or more interfaces. The blocks of the computational framework 1100 may be provided as instructions such as the instructions 1096 of the system 1090 of Fig. 10. The computational framework 1100 of Fig. 11 can include one or more features of the OMEGA framework (SLB, Houston, Texas), which includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as anisotropy, dip, and variable density.

As shown in Fig. 11, the computational framework 1100 includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools.

The framework 1100 can include features for geophysics data processing. The framework 1100 can allow for processing various types of data such as, for example, one or more of: land, marine, and transition zone data; time and depth data; 2D, 3D, and 4D surveys; isotropic and anisotropic (TTI and VTI) velocity fields; and multicomponent data.

The framework 1100 can allow for transforming seismic, electromagnetic, microseismic, and/or vertical seismic profile (VSP) data into actionable information, for example, to perform one or more actions in the field for purposes of resource production, etc. The framework 1100 can extend workflows into reservoir characterization and earth modelling. For example, the framework 1100 can extend geophysics data processing into reservoir modelling by integrating with the DELFI environment and/or the PETREL framework via the Earth Model Building (EMB) tools, which enable a variety of depth imaging workflows, including model building, editing and updating, depth-tomography QC, residual moveout analysis, and volumetric common-image-point (CIP) pick QC. Such functionalities, in conjunction with the framework's depth tomography and migration algorithms, can produce accurate and precise images of the subsurface. The framework 1100 may provide support for field to final imaging, to prestack seismic interpretation and quantitative interpretation, from exploration to development.

As an example, the FDMOD component can be instantiated via one or more CPUs and/or one or more GPUs for one or more purposes. For example, consider utilizing the FDMOD for generating synthetic shot gathers by using full 3D, two-way wavefield extrapolation modelling, the same wavefield extrapolation logic matches that are used by reverse-time migration (RTM). FDMOD can model various aspects and effects of wave propagation. The output from FDMOD can be or include synthetic shot gathers including direct arrivals, primaries, surface multiples, and interbed multiples. The model can be specified on a dense 3D grid as velocity and optionally as anisotropy, dip, and variable density. As an example, survey designs can be modelled to ensure quality of a seismic survey, which may account for structural complexity of the model. Such an approach can enable evaluation of how well a target zone will be illuminated. Such an approach may be part of a quality control process (e.g., task) as part of a seismic workflow. As an example, a FDMOD approach may be specified as to size, which may be model size (e.g., a grid cell model size). Such a parameter can be utilized in determining resources to be allocated to perform a FDMOD related processing task. For example, a relationship between model size and CPUs, GPUs, etc., may be established for purposes of generating results in a desired amount of time, which may be part of a plan (e.g., a schedule) for a seismic interpretation workflow.

As an example, as survey data become available, interpretation tasks may be performed for building, adjusting, etc., one or more models of a geologic environment. For example, consider a vessel that transmits a portion of acquired data while at sea and that transmits a portion of acquired data while in port, which may include physically offloading one or more storage devices and transporting such one or more storage devices to an onshore site that includes equipment operatively coupled to one or more networks (e.g., cable, etc.). As data are available, options exist for tasks to be performed.

As an example, the framework 1100 can include one or more sets of instructions executable to perform one or more methods such as, for example, the method 710 of Fig. 7, the method 730 of Fig. 7, the method of Fig. 10, etc.

As an example, one or more frameworks, processes, techniques, etc., may implement machine learning and/or one or more machine learning models. For example, consider an approach that can define and/or select portions of continuous seismic source data for purposes of decomposition, windowing, etc.

As to some examples of types of machine learning and/or machine learning models that may be implemented for one or more purposes, consider one or more of a support vector machine (SVM) model, a k-nearest neighbors (KNN) model, an ensemble classifier model, a neural network (NN) model, etc. As an example, a machine learning model can be a deep learning model (e.g., deep Boltzmann machine, deep belief network, convolutional neural network, stacked auto-encoder, etc.), an ensemble model (e.g., random forest, gradient boosting machine, bootstrapped aggregation, AdaBoost, stacked generalization, gradient boosted regression tree, etc.), a neural network model (e.g., radial basis function network, perceptron, back-propagation, Hopfield network, etc.), a regularization model (e.g., ridge regression, least absolute shrinkage and selection operator, elastic net, least angle regression), a rule system model (e.g., cubist, one rule, zero rule, repeated incremental pruning to produce error reduction), a regression model (e.g., linear regression, ordinary least squares regression, stepwise regression, multivariate adaptive regression splines, locally estimated scatterplot smoothing, logistic regression, etc.), a Bayesian model (e.g., naive Bayes, average on-dependence estimators, Bayesian belief network, Gaussian naive Bayes, multinomial naive Bayes, Bayesian network), a decision tree model (e.g., classification and regression tree, iterative dichotomiser 3, C4.5, C5.0, chi-squared automatic interaction detection, decision stump, conditional decision tree, M5), a dimensionality reduction model (e.g., principal component analysis, partial least squares regression, Sammon mapping, multidimensional scaling, projection pursuit, principal component regression, partial least squares discriminant analysis, mixture discriminant analysis, quadratic discriminant analysis, regularized discriminant analysis, flexible discriminant analysis, linear discriminant analysis, etc.), an instance model (e.g., k-nearest neighbor, learning vector quantization, self-organizing map, locally weighted learning, etc.), a clustering model (e.g., k-means, k-medians, expectation maximization, hierarchical clustering, etc.), etc.

As an example, a machine model may be built using a computational framework with a library, a toolbox, etc., such as, for example, those of the MATLAB framework (MathWorks, Inc., Natick, Massachusetts). The MATLAB framework includes a toolbox that provides supervised and unsupervised machine learning algorithms, including support vector machines (SVMs), boosted and bagged decision trees, k-nearest neighbor (KNN), k-means, k-medoids, hierarchical clustering, Gaussian mixture models, and hidden Markov models. Another MATLAB framework toolbox is the Deep Learning Toolbox (DLT), which provides a framework for designing and implementing deep neural networks with algorithms, pretrained models, and apps. The DLT provides convolutional neural networks (ConvNets, CNNs) and long short-term memory (LSTM) networks to perform classification and regression on image, time-series, and text data. The DLT includes features to build network architectures such as generative adversarial networks (GANs) and Siamese networks using custom training loops, shared weights, and automatic differentiation. The DLT provides for model exchange various other frameworks.

As an example, the TENSORFLOW framework (Google LLC, Mountain View, CA) may be implemented, which is an open source software library for dataflow programming that includes a symbolic math library, which can be implemented for machine learning applications that can include neural networks. As an example, the CAFFE framework may be implemented, which is a DL framework developed by Berkeley AI Research (BAIR) (University of California, Berkeley, California). As another example, consider the SCIKIT platform (e.g., scikit-learn), which utilizes the PYTHON programming language. As an example, a framework such as the APOLLO AI framework may be utilized (APOLLO.AI GmbH, Germany). As an example, a framework such as the PYTORCH framework may be utilized (Facebook AI Research Lab (FAIR), Facebook, Inc., Menlo Park, California).

As an example, a training method can include various actions that can operate on a dataset to train a ML model. As an example, a dataset can be split into training data and test data where test data can provide for evaluation. A method can include cross-validation of parameters and best parameters, which can be provided for model training.

The TENSORFLOW framework can run on multiple CPUs and GPUs (with optional CUDA (NVIDIA Corp., Santa Clara, California) and SYCL (The Khronos Group Inc., Beaverton, Oregon) extensions for general-purpose computing on graphics processing units (GPUs)). TENSORFLOW is available on 64-bit LINUX, MACOS (Apple Inc., Cupertino, California), WINDOWS (Microsoft Corp., Redmond, Washington), and mobile computing platforms including ANDROID (Google LLC, Mountain View, California) and IOS (Apple Inc.) operating system based platforms.

TENSORFLOW computations can be expressed as stateful dataflow graphs; noting that the name TENSORFLOW derives from the operations that such neural networks perform on multidimensional data arrays. Such arrays can be referred to as "tensors".

As an example, a method can include receiving continuous source seismic data from a marine seismic survey of a geologic region; breaking up the continuous source seismic data into portions; performing a simulation for each of the portions to generate simulated seismic data; and generating an image of the geologic region using the portions of the continuous source seismic data and the simulated seismic data. In such an example, the method can include performing an iterative inversion using the portions and the simulated seismic data. In such an example, the portions can represent decomposed portions of a wavefield represented by the continuous source seismic data where the portions define a set of point-source responses and a residual.

As an example, a method can include generating an image via windowing a residual into windowed portions and associating each of the windowed portions with portions of continuous source seismic data.

As an example, a method can include separating signal and coherent noise components of a set of point-source responses where, for example, generating an image does not utilize the coherent noise components to generate the image with reduced noise.

As an example, portions can represent localized portions of continuous source seismic data defined by a time window function that includes a start time and an end time. In such an example, a simulation can utilize a commencement time prior to the start time where, for example, the commencement time prior to the start time improves accuracy of modeling of energy in each of the localized portions.

As an example, a method can include performing a simulation for each of a number of portions to generate simulated seismic data where the method performs simulations in parallel.

As an example, a method can include generating an image of a geologic region using portions of continuous source seismic data and simulated seismic data in a manner that is computationally more efficient than generating the image without breaking up the continuous source seismic data into the portions. In such an example, generating can be computationally more efficient via a reduction in memory utilization.

As an example, a method can include breaking up continuous source seismic data into portions where the breaking up is performed in a model-domain. In such an example, the portions can correspond to a set of point-source responses in the model-domain.

As an example, a method can include breaking up continuous source seismic data into portions where the breaking up is performed in a data-domain. In such an example, the portions can correspond to time windowed portions in the data-domain.

As an example, an image generated by a method can indicate hydrocarbons in a geologic region.

As an example, a marine seismic survey can utilize a continuous source towed by a vessel along a line for acquiring continuous source seismic data.

As an example, a system can include a processor; memory accessible by the processor; and processor-executable instructions stored in the memory that are executable to instruct the system to: receive continuous source seismic data from a marine seismic survey of a geologic region; break up the continuous source seismic data into portions; perform a simulation for each of the portions to generate simulated seismic data; and generate an image of the geologic region using the portions of the continuous source seismic data and the simulated seismic data.

As an example, one or more computer-readable storage media can include computer-executable instructions executable to instruct a computer to: receive continuous source seismic data from a marine seismic survey of a geologic region; break up the continuous source seismic data into portions; perform a simulation for each of the portions to generate simulated seismic data; and generate an image of the geologic region using the portions of the continuous source seismic data and the simulated seismic data.

A computer-readable storage medium (or computer-readable storage media) is non-transitory, not a signal and not a carrier wave. Rather, a computer-readable storage medium is a physical device that can be considered to be circuitry or hardware.

As an example, a computer program product can include one or more computer-readable storage media that can include processor-executable instructions to instruct a computing system to perform one or more methods and/or one or more portions of a method.

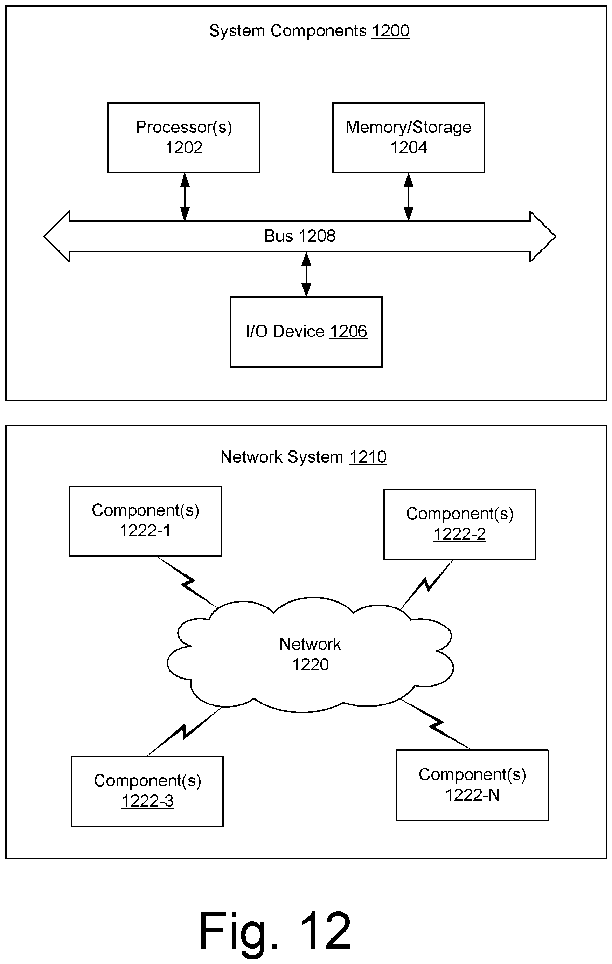

Fig. 12 shows components of an example of a computing system 1200 and an example of a networked system 1210 with a network 1220. The system 1200 includes one or more processors 1202, memory and/or storage components 1204, one or more input and/or output devices 1206 and a bus 1208. In an example embodiment, instructions may be stored in one or more computer-readable media (e.g., memory/storage components 1204). Such instructions may be read by one or more processors (e.g., the processor(s) 1202) via a communication bus (e.g., the bus 1208), which may be wired or wireless. The one or more processors may execute such instructions to implement (wholly or in part) one or more attributes (e.g., as part of a method). A user may view output from and interact with a process via an I/O device (e.g., the device 1206). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1210. The network system 1210 includes components 1222-1, 1222-2, 1222-3, ... 1222-N. For example, the components 1222-1 may include the processor(s) 1202 while the component(s) 1222-3 may include memory accessible by the processor(s) 1202. Further, the component(s) 1222-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

**Claims**

1. A method comprising:

   receiving continuous source seismic data from a marine seismic survey of a geologic region;
   breaking up the continuous source seismic data into portions;
   performing a simulation for each of the portions to generate simulated seismic data; and
   generating an image of the geologic region using the portions of the continuous source seismic data and the simulated seismic data.

2. The method of claim 1, comprising performing an iterative inversion using the portions and the simulated seismic data.

3. The method of claim 1 or 2, wherein the portions represent decomposed portions of a wavefield represented by the continuous source seismic data and wherein the portions define a set of point-source responses and a residual.

4. The method of claim 3, wherein generating the image includes windowing the residual into windowed portions and associating each of the windowed portions with the portions of the continuous source seismic data.

5. The method of claim 3, comprising separating signal and coherent noise components of the set of point-source responses, wherein generating the image preferably does not utilize the coherent noise components to generate the image with reduced noise.

6. The method of any one of the preceding claims, wherein the portions represent localized portions of the continuous source seismic data defined by a time window function that includes a start time and an end time.

7. The method of claim 6, wherein the simulation utilizes a commencement time prior to the start time, wherein the commencement time prior to the start time preferably improves accuracy of modeling of energy in each of the localized portions.

8. The method of any one of the preceding claims, wherein the performing a simulation for each of the portions to generate simulated seismic data performs simulations in parallel.

9. The method of any one of the preceding claims, wherein the generating the image of the geologic region using the portions of the continuous source seismic data and the simulated seismic data is computationally more efficient than generating the image without breaking up the continuous source seismic data into the portions, wherein the generating preferably is computationally more efficient via a reduction in memory utilization.

10. The method of any one of the preceding claims, wherein the breaking up the continuous source seismic data into the portions is performed in a model-domain, wherein the portions preferably correspond to a set of point-source responses in the model-domain.

11. The method of any one of the preceding claims, wherein the breaking up the continuous source seismic data into the portions is performed in a data-domain, wherein the portions preferably correspond to time windowed portions in the data-domain.

12. The method of any one of the preceding claims, wherein the image indicates hydrocarbons in the geologic region.

13. The method of any one of the preceding claims, wherein the marine seismic survey utilizes a continuous source towed by a vessel along a line.

14. A system comprising:

    a processor;
    memory accessible by the processor; and
    processor-executable instructions stored in the memory that are executable to instruct the system to perform the method according to any one of the preceding claims.

15. One or more computer-readable storage media comprising computer-executable instructions executable to instruct a computer to perform the method according to any one of the claims 1 - 13.

System 100

Workspace Framework 110

| Subsurface | Planning | Construction | Production |

Workspace Solutions                                                                 GUI 120

Computational Frameworks (Applications)     121

| DRILLPLAN | PETREL | TECHLOG |

| PETROMOD | ECLIPSE | INTERSECT |

| PIPESIM | OMEGA | OTHER (e.g., Emissions) |

Visualization   123        Other 124

OpenGL, Etc.

Data Access     125

Drive X / Browse

Data Storage     126

Personal Storage            10GB

Shared Storage              1TB

Projects   122

| EARTH MODEL | WELL/DRILL PLAN | RESERVOIR SIMULATION |

160

Geologic Environment 150
(e.g., sensing, drilling, injecting, extracting, etc.)

155

1000
157    158    159
0
1000
2000    153
3000    154
4000    151
5000

152    156

Fig. 1

Fig. 2

Fig. 3

# Fig. 4

Forward Modeling  510

Inversion  530

# Fig. 5

Method 600

Provide Initial Model & Selected Wavelet
610

Generate Synthetic Data
620

Compare Field Data to Synthetic Data
630

Compute Gradient
640

Iterate Until
Convergence
Criterion Met
670

Perform Line Search
650

Update Model
660

# Fig. 6

Method 710

Method 730

Receive Continuous Source
Seismic Data
712

Receive Continuous Source
Seismic Data
732

Decompose Wavefield into
a Set of Point-Source Responses
and a Residual, where
the Residual is Windowed
Appropriately for Simulation
714

Localize the Continuous
Source Seismic Data using
a Time Window Function
734

Simulate a Subset of the
Continuous Source Seismic Data
for which the Source Covers
a Part of a Line
716

Simulate a Localized Portion of the
Continuous Source Seismic Data
using a Earlier Start Time
736

Processing and/or Imaging the
Subset of the Continuous Source
Seismic Data with the Residual
718

Windowing the Simulated
Localized Portion using
the Time Window Function
738

# Fig. 7

800

$x$

Entire source line

$t$

Acquired data: **d**

Point source
representation: $\widehat{m}$

Residual: $\varepsilon$

Windowed
residual: $W_i\,\varepsilon$

$x$

Subset of
source line

$t$

Simulated
data: $F_i\,\widehat{m}$

Data for imaging

# Fig. 8

900

Fig. 9

Method 1000

Receive continuous source seismic data
from a marine seismic survey of a geologic region
1010

CRM 1011

Break up the continuous source seismic data into portions
1020

CRM 1021

Perform a simulation for each of the portions
to generate simulated seismic data
1030

CRM 1031

Generate an image of the geologic region using the portions of the
continuous source seismic data and the simulated seismic data
1040

CRM 1041

System 1090

1091

Computer(s) 1092

Processor(s) 1093

Memory 1094

Network(s) 1095

Instructions 1096

# Fig. 10

Framework 1100

RTM

FDMOD

ABM

Gaussian PM

Depth Pack

KPSDM

Tomo

Other(s)

Time Pack

KPSTM

GSMP

XIMP

Foundation

Desktop

Development Tools (e.g., SDK, etc.)

# Fig. 11

System Components 1200

Processor(s)
1202

Memory/Storage
1204

Bus 1208

I/O Device 1206

Network System 1210

Component(s)
1222-1

Component(s)
1222-2

Network
1220

Component(s)
1222-3

Component(s)
1222-N

# Fig. 12

Europäisches
Patentamt

European
Patent Office

Office européen
des brevets

## EUROPEAN SEARCH REPORT

Application Number

EP 24 18 2223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/108602 A1 (YANG DI [US] ET AL) 20 April 2017 (2017-04-20)<br><br>* claims 1, 10, 11 *<br>* figure 1 *<br>* paragraph [0017] *<br>* paragraph [0040] - paragraph [0042] *<br>- - - - - | 1,2, 8-10, 12-15 | INV.<br>G01V1/28<br>G01V1/30<br>G01V1/38 |
| X | US 2015/241586 A1 (WINTER OLIVIER [US]) 27 August 2015 (2015-08-27)<br><br>* claims 1, 14-16 *<br>* figures 1, 15, 17, 20 *<br>* paragraph [0002] - paragraph [0003] *<br>* paragraph [0013] - paragraph [0014] *<br>* paragraph [0040] - paragraph [0046] *<br>- - - - - | 1,3-7, 11,12, 14,15 | |
| X,P | WO 2023/137434 A1 (SCHLUMBERGER TECHNOLOGY CORP [US]; SCHLUMBERGER CA LTD [CA] ET AL.) 20 July 2023 (2023-07-20)<br>* figure 5 *<br>* paragraph [0089] *<br>* paragraph [0112] *<br>* paragraph [0115] *<br>* paragraph [0129] *<br>* paragraph [0172] *<br>- - - - - | 1,12-15 | TECHNICAL FIELDS SEARCHED (IPC)<br><br>G01V |

The present search report has been drawn up for all claims

| Place of search | Date of completion of the search | Examiner |
|---|---|---|
| The Hague | 27 September 2024 | Lameloise, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 2223

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| US 2017108602 A1 | 20-04-2017 | AU 2016337084 A1 | 10-05-2018 |
| | | BR 112018004435 A2 | 25-09-2018 |
| | | CA 2998519 A1 | 20-04-2017 |
| | | CN 108139498 A | 08-06-2018 |
| | | EP 3362823 A1 | 22-08-2018 |
| | | KR 20180067650 A | 20-06-2018 |
| | | US 2017108602 A1 | 20-04-2017 |
| | | WO 2017065889 A1 | 20-04-2017 |
| US 2015241586 A1 | 27-08-2015 | CA 2940175 A1 | 27-08-2015 |
| | | EP 3111252 A2 | 04-01-2017 |
| | | PL 3111252 T3 | 17-01-2022 |
| | | US 2015241586 A1 | 27-08-2015 |
| | | WO 2015125010 A2 | 27-08-2015 |
| WO 2023137434 A1 | 20-07-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63508568 A